(19) Europäisches Patentamt
European Patent Office
Office européen des brevets

(11) EP 4 640 786 A1

(12) **EUROPEAN PATENT APPLICATION**
published in accordance with Art. 153(4) EPC

(43) Date of publication:
**29.10.2025 Bulletin 2025/44**

(21) Application number: **23906623.6**

(22) Date of filing: **28.11.2023**

(51) International Patent Classification (IPC):
***C09K 3/18*** *(2006.01)* ***D06M 13/395*** *(2006.01)*
***D06M 13/463*** *(2006.01)* ***D06M 15/643*** *(2006.01)*

(52) Cooperative Patent Classification (CPC):
**C09K 3/00; C09K 3/18; D06M 13/395; D06M 13/463; D06M 15/643**

(86) International application number:
**PCT/JP2023/042601**

(87) International publication number:
**WO 2024/135255 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.12.2022 JP 2022202130**

(71) Applicant: **SHIN-ETSU CHEMICAL CO., LTD.**
**Tokyo 1000005 (JP)**

(72) Inventors:
- **HAMAJIMA, Yuta**
  **Annaka-shi, Gunma 379-0224 (JP)**
- **FUKAMACHI, Takumi**
  **Annaka-shi, Gunma 379-0224 (JP)**

(74) Representative: **Schicker, Silvia**
**Wuesthoff & Wuesthoff**
**Patentanwälte und Rechtsanwalt PartG mbB**
**Schweigerstraße 2**
**81541 München (DE)**

(54) **WATER REPELLENT COMPOSITION AND FIBER TREATMENT AGENT**

(57) The present invention is a water repellent composition containing: (A) an organohydrogen polysiloxane being represented by the following average composition formula (1) and having a viscosity of 5 to 1000 mPa·s at 25°C, in an amount of 100 parts by mass; (B) an organopolysiloxane having a viscosity of 300,000 mPa·s or more at 25°C and being represented by the following average composition formula (2), in an amount of 10 to 100 parts by mass; (C) a surfactant in an amount of 0.5 to 50 parts by mass; (D) a condensation reaction catalyst in an amount of 5 to 100 parts by mass; and (E) water in an amount of 50 to 3,000 parts by mass, wherein, when a hydrogen gas generation amount of the component (A) in terms of the standard state is defined as X (mL/g) and a ratio (g/h) of g to h of the component (B) is defined as Y, a ratio (X/Y) of X to Y is in a range of 0.30 ≤ (X/Y) ≤ 4.50. This provides a water repellent composition that has an excellent effect of imparting water repellency, can impart good flexibility and texture to fibers after treatment, and can maintain good water repellency and flexibility even after washing.

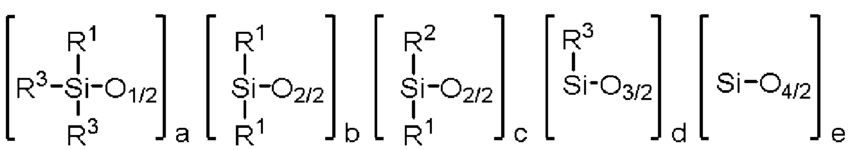
(1)

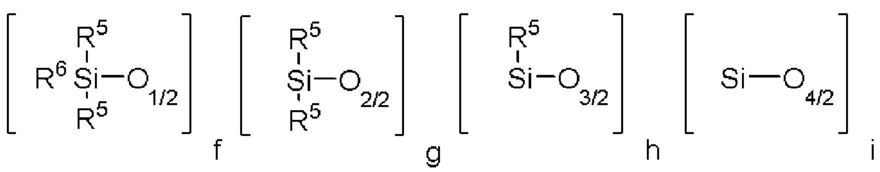
(2)

EP 4 640 786 A1

## Description

TECHNICAL FIELD

The present invention relates to a water repellent composition. In particular, the present invention relates to a water repellent composition that imparts high water repellency to fibers, and a fiber treatment agent containing the composition.

BACKGROUND ART

Conventionally, fluorine-based compounds have been used as a method to impart water repellency to natural fibers, synthetic fibers, leather, paper, and the like. The fiber products treated with a water repellent containing a fluorine compound as a main component have excellent water repellency and excellent durability. However, the range of application is limited due to the high cost of fluorine-based compounds and the high temperature treatment required for presenting high water repellency. In addition, because of its very stable structure, the fluorine compound is difficult to be degraded in the environment and also has accumulative properties, thus there are environmental impacts, and the use of fluorine compounds is being regulated at home and abroad. From these background, the development of a water repellent free of a fluorine compound has been studied (Patent Document 1).

As a water repellent free of a fluorine compound, compositions containing a silicon-based compound such as silicone as a main component have been studied. The composition containing modified silica as a main component has been studied in Patent Document 2, and the composition containing a silicone alkoxy oligomer or polyorganosylcesquioxane has been studied in Patent Document 3.

The silicon-based compound may impart good flexibility and texture and may impart water repellency to fiber products. In the documents of the prior art described above, the composition optimization of the silicon-based compound and each component enhances the effect of imparting water repellency, and the treated fiber shows excellent water repellency. However, none of the above Patent Documents 1 to 3 describe flexibility or texture, thus achieving high water repellency while also flexibility and texture has not yet been solved. In addition, when a water repellent composition is used for fiber products, it is desirable that the water repellency is maintained even after washing. However, none of the above Patent Documents 1 to 3 describe about the water repellency after washing.

In recent years, low-molecular weight cyclic siloxanes (octamethylcyclotetrasiloxane, decamethylcyclopentasiloxane, and dodecamethylcyclohexasiloxane) have become a concern as environmentally hazardous substances, and regulations for them are being strengthened in various countries. Thus, products in which the contents of octamethylcyclotetrasiloxane, decamethylcyclopentasiloxane, and dodecamethylcyclohexasiloxane are reduced have been required.

Besides the above Patent Documents, Patent Documents 4 and 5 describe the use of a composition containing an amino-modified silicone, which is a silicon compound, as a water repellent, and state that the water repellency can be maintained even after repeated washing. However, amino-modified silicones have been known to yellow during heating and long-term storage. Thus, the water repellent containing an amino-modified silicone has a problem that the treated fiber products may yellow.

CITATION LIST

PATENT LITERATURE

Patent Document 1: JP 2960304 B
Patent Document 2: JP 2018-104866 A
Patent Document 3: JP 6573548 B
Patent Document 4: JP 2016-204565 A
Patent Document 5: WO 2019/131456 A

SUMMARY OF INVENTION

TECHNICAL PROBLEM

In view of the problems in the conventional arts described above, an object of the present invention is to provide a water repellent composition that has an excellent effect of imparting water repellency, can impart good flexibility and texture to fibers after treatment, and can maintain good water repellency and flexibility even after washing.

SOLUTION TO PROBLEM

To solve the above problem, the present invention provides a water repellent composition containing:

(A) an organohydrogen polysiloxane being represented by the following average composition formula (1):

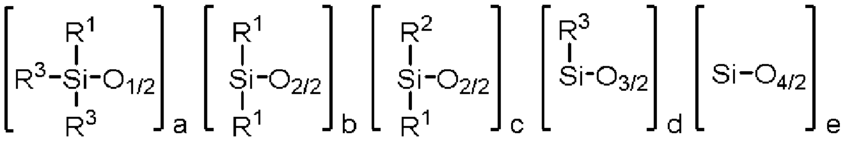

(1)

wherein, $R^1$ is each independently an unsubstituted monovalent hydrocarbon group having 1 to 20 carbon atoms, $R^2$ is a hydrogen atom, $R^3$ is each independently a group selected from $R^1$, $R^2$, -OH, $-OCH_3$, and $-OC_2H_5$, and a, b, c, d and e are numbers satisfying ranges of $0 \leq a \leq 10$, $0 \leq b \leq 100$, $0 \leq c \leq 500$, $0 \leq d \leq 5$, and $0 \leq e \leq 5$, provided that, when c = 0, one or more of $R^3$ is $R^2$, and having a viscosity of 5 to 1,000 mPa·s at 25°C, in an amount of 100 parts by mass;
(B) an organopolysiloxane having a viscosity of 300,000 mPa·s or more at 25°C and being represented by the following average composition formula (2), in an amount of 10 to 100 parts by mass,

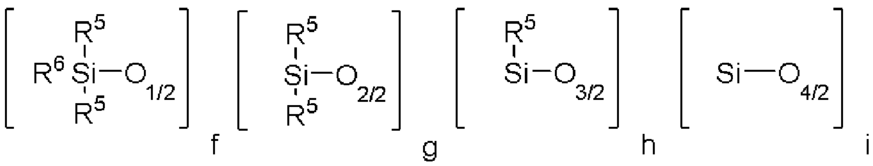

(2)

wherein, $R^5$ is each independently a hydrogen atom or a substituted or unsubstituted monovalent organic group having 1 to 20 carbon atoms, $R^6$ is each independently a group selected from the options of $R^5$, a hydroxy group, or an alkoxy group having 1 to 20 carbon atoms, and f, g, h, and i are values satisfying a viscosity of the organopolysiloxane of 300,000 mPa·s or more at 25°C and satisfy $f \geq 2$, $h \geq 1$, $i \geq 0$, and a ratio (g/h) of g to h of $50 \leq (g/h) \leq 1{,}000$;
(C) a surfactant in an amount of 0.5 to 50 parts by mass;
(D) a condensation reaction catalyst in an amount of 5 to 100 parts by mass; and
(E) water in an amount of 50 to 3,000 parts by mass,

wherein, when a hydrogen gas generation amount of the component (A) in terms of 0°C and 101.325 kPa is defined as X (mL/g) and the ratio (g/h) of g to h of the component (B) is defined as Y, a ratio (X/Y) of X to Y is in a range of $0.30 \leq (X/Y) \leq 4.50$.
The water repellent composition of the present invention has an excellent effect of imparting water repellency, can impart good flexibility and texture to fibers after treatment, and can maintain good water repellency and flexibility even after washing.
In this case, it is preferable that 10% or more of total substituents represented by $R^1$, $R^2$ and $R^3$ in the component (A) is $R^2$.
Such a water repellent composition can have better water repellency and flexibility.
It is preferable that the ratio (g/h) of g to h of the component (B) is $70 \leq (g/h) \leq 950$.
Such a water repellent composition can have more excellent water repellency and flexibility.
It is preferable that the component (D) is a compound of one or more metals selected from tin, zinc, bismuth, titanium, iron, zirconium, and aluminum.
These compounds of metals have high catalytic activity as the component (D) and are readily available.
It is preferable that each content of octamethylcyclotetrasiloxane (D4), decamethylcyclopentasiloxane (D5), and dodecamethylcyclohexasiloxane (D6) in the water repellent composition is less than 3,000 ppm based on 100 parts by mass of the component (B).
Such a water repellent composition has less environmental impact.
It is preferable that the (C) surfactant contains a cationic surfactant, and it is more preferable that the cationic surfactant is cationic surfactants represented by the following formulae (C-1) and (C-2):

(C-1) a cationic surfactant represented by $Q^1_3(CH_3)N^+ \cdot X^-$
(C-2) a cationic surfactant represented by $Q^2(CH_3)_3N^+ \cdot X^-$
wherein, $Q^1$ is the same or different and is a monovalent organic group having 6 to 30 carbon atoms, $Q^2$ is a monovalent organic group having 17 to 30 carbon atoms, and X is each independently a halogen atom or a

monovalent carboxyl group having 1 to 6 carbon atoms.

Such a water repellent composition can well emulsify and disperse organohydrogen polysiloxane or organopolysiloxane into water.

It is preferable that the water repellent composition of the present invention further contains (F) a polyfunctional isocyanate compound in an amount of 1 to 50 parts by mass based on 100 parts by mass of the component (A).

Such a water repellent composition has more excellent water repellency maintenance.

It is preferable in the water repellent composition of the present invention that a content of a fluorine compound is less than 1 part by mass based on 100 parts by mass of the component (A).

Such a water repellent composition is preferred from the viewpoint of reducing the environmental impact.

The present invention also provides a fiber treatment agent containing the water repellent composition described above.

Such a fiber treatment agent has an excellent effect of imparting water repellency, can impart good flexibility and texture to fibers after treatment, and can maintain good water repellency and flexibility even after washing.

## ADVANTAGEOUS EFFECTS OF INVENTION

The water repellent composition of the present invention can impart high water repellency along with good flexibility and texture to fibers. The good water repellency and flexibility can be maintained even after washing.

## DESCRIPTION OF EMBODIMENTS

The present inventors have intensively studied to achieve the above objects and found that the composition containing the following components (A) to (E) can impart high water repellency along with good flexibility and texture to fibers, and have completed the present invention.

In particular, (i) by using as the component (A) an organohydrogen polysiloxane having a reactive group (a hydrogen atom directly bonded to a silicon atom) in a molecule, the reactive group is chemically reacted and firmly bond with a substrate in the presence of a catalyst (component (D)), and (ii) by setting both a ratio (g/h) of the D unit amount to the T unit amount in the component (B) and the ratio (X/Y) of the hydrogen gas generation amount X (mL/g) in terms of the standard state of the component (A) to the ratio (defined as Y) to an appropriate range, it is possible to achieve both flexibility and water repellency. This finding has been first discovered by the present inventors.

That is, the present invention is a water repellent composition containing:

(A) an organohydrogen polysiloxane being represented by the following average composition formula (1):

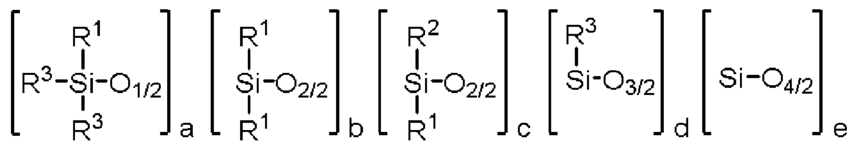

(1)

wherein, $R^1$ is each independently an unsubstituted monovalent hydrocarbon group having 1 to 20 carbon atoms, $R^2$ is a hydrogen atom, $R^3$ is each independently a group selected from $R^1$, $R^2$, $-OH$, $-OCH_3$, and $-OC_2H_5$, and a, b, c, d and e are numbers satisfying ranges of $0 \leq a \leq 10$, $0 \leq b \leq 100$, $0 \leq c \leq 500$, $0 \leq d \leq 5$, and $0 \leq e \leq 5$, provided that, when c = 0, at least one of $R^3$ is $R^2$, and having a viscosity of 5 to 1,000 mPa·s at 25°C, in an amount of 100 parts by mass;

(B) an organopolysiloxane having a viscosity of 300,000 mPa·s or more at 25°C and being represented by the following average composition formula (2), in an amount of 10 to 100 parts by mass,

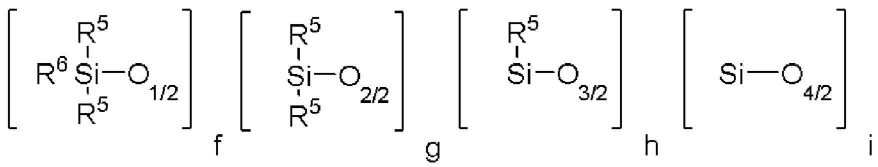

(2)

wherein, $R^5$ is each independently a hydrogen atom or a substituted or unsubstituted monovalent organic group having 1 to 20 carbon atoms, $R^6$ is each independently a group selected from the options of $R^5$, a hydroxy group, or an alkoxy group having 1 to 20 carbon atoms, and f, g, h, and i are values satisfying a viscosity of the organopolysiloxane of 300,000 mPa·s or more at 25°C and satisfy $f \geq 2$, $h \geq 1$, $i \geq 0$, and a ratio (g/h) of g to h of $50 \leq (g/h) \leq 1{,}000$;

(C) a surfactant in an amount of 0.5 to 50 parts by mass;
(D) a condensation reaction catalyst in an amount of 5 to 100 parts by mass; and
(E) water in an amount of 50 to 3,000 parts by mass,

wherein, when a hydrogen gas generation amount of the component (A) in terms of 0°C and 101.325 kPa is defined as X (mL/g) and the ratio (g/h) of g to h of the component (B) is defined as Y, a ratio (X/Y) of X to Y is in a range of $0.30 \leq (X/Y) \leq 4.50$.

Hereinafter, the present invention will be described in detail, but the present invention is not limited thereto.

The water repellent composition of the present invention is characterized in that a water repellent composition contains (A) a particular organohydrogen polysiloxane, (B) a particular organopolysiloxane, (C) a surfactant, (D) a condensation reaction catalyst, and (E) water, wherein, when a hydrogen gas generation amount of the component (A) in terms of 0°C and 101.325 kPa is defined as X (mL/g) and a ratio (g/h) of g to h of the component (B) is defined as Y, a ratio (X/Y) of X to Y is in a range of $0.30 \leq (X/Y) \leq 4.50$. Hereinafter, these components will be described.

[Component (A)]

The component (A) of the present invention is (A) an organohydrogen polysiloxane being represented by the following average composition formula (1):

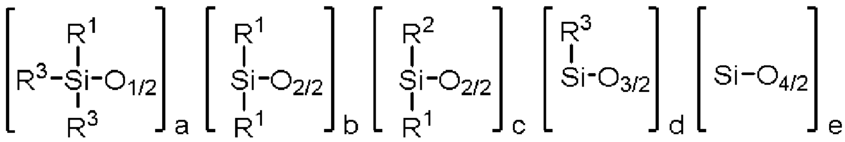

(1)

wherein, $R^1$ is each independently an unsubstituted monovalent hydrocarbon group having 1 to 20 carbon atoms, $R^2$ is a hydrogen atom, $R^3$ is each independently a group selected from $R^1$, $R^2$, $-OH$, $-OCH_3$, and $-OC_2H_5$, and a, b, c, d and e are numbers satisfying ranges of $0 \leq a \leq 10$, $0 \leq b \leq 100$, $0 \leq c \leq 500$, $0 \leq d \leq 5$, and $0 \leq e \leq 5$, provided that, when c = 0, at least one of $R^3$ is $R^2$, and having a viscosity of 5 to 1,000 mPa·s at 25°C. One kind of the component (A) can be used singly or two or more kinds thereof can be used in combination.

$R^1$ is each independently an unsubstituted monovalent hydrocarbon group having 1 to 20 carbon atoms, and examples thereof include an alkyl group such as a methyl group, an ethyl group, a propyl group, an isopropyl group, a butyl group, a t-butyl group, a hexyl group, a cyclohexyl group, a heptyl group, an octyl group, a nonyl group, a decyl group, a tetradecyl group, and an octadecyl group; an alkenyl group such as a vinyl group, an allyl group, a 5-hexenyl group, and an oleyl group; and an aryl group such as a phenyl group, a tolyl group, and a naphthyl group. Among them, a methyl group, a long chain (6 to 20 carbon atoms) alkyl group, and a phenyl group are preferred, and a methyl group is more preferred.

$R^2$ is a hydrogen atom, $R^3$ is each independently a group selected from $R^1$ and $R^2$, $-OH$, $-OCH_3$ and $-OC_2H_5$, provided that, when c = 0, at least one of $R^3$ is $R^2$. It is preferred that 10% or more of total substituents represented by $R^1$, $R^2$, and $R^3$ is $R^2$ (a hydrogen atom), more preferably 20% or more thereof is $R^2$ (a hydrogen atom), and further preferably 30% or more thereof is $R^2$ (a hydrogen atom). The upper limit is not particularly limited, but can be, for example, 60%, preferably 50%.

a is $0 \leq a \leq 10$, preferably $2 \leq a \leq 5$, and more preferably $2 \leq a \leq 3$. When a exceeds 10, the viscosity of the organohydrogen polysiloxane becomes too low, so that the water repellency is reduced.
b is $0 \leq b \leq 100$, preferably $10 \leq b \leq 100$, more preferably $20 \leq b \leq 90$, and further preferably $30 \leq b \leq 80$. When b exceeds 100, the viscosity of the organohydrogen polysiloxane becomes too high, so that the emulsification stability becomes poor.
c is $0 \leq c \leq 500$, preferably $10 \leq c \leq 400$, more preferably $20 \leq c \leq 200$, and further preferably $30 \leq c \leq 100$. When c exceeds 500, the viscosity of the organohydrogen polysiloxane becomes too high, so that the emulsification stability becomes poor.
d is $0 \leq d \leq 5$, preferably d = 0. When d exceeds 5, the viscosity of the organohydrogen polysiloxane becomes too low, so that the water repellency is reduced.
e is $0 \leq e \leq 5$, preferably e = 0. When e exceeds 5, the viscosity of the organohydrogen polysiloxane becomes too low, so that the water repellency is reduced.

The viscosity of the component (A) at 25°C is 5 to 1,000 mPa·s, more preferably 10 to 250 mPa·s. Note that the viscosity is a value measured by a BM-type viscometer (manufactured by, for example, TOKYO KEIKI INC.). In addition, according to the viscosity, a rotor, a rotation speed and a rotation time are appropriately set based on conventional

methods.

The component (A) has preferably a hydrogen gas generation amount of 200 mL/g or more, more preferably 220 mL/g or more, and particularly preferably 250 mL/g or more in terms of 0°C and 101.325 kPa (standard state).

The hydrogen gas generation amount is measured as follows.

(Measurement method)

1 g of a sample to be measured is weighed into an Erlenmeyer flask, and then 10 mL of 1-butanol is added and mixed. Next, a 20 wt% aqueous NaOH solution is added dropwise, and the amount of hydrogen gas generated at this time

$$(Si\text{-}H + H_2O \rightarrow Si\text{-}OH + H_2\uparrow)$$

is measured. The hydrogen gas generation amount X (mL/g) is calculated by the following calculation formula:

X = [(measured value of hydrogen gas generation amount (mL)) × 273]/[(sample amount (g)) × (273 + temperature at time of measurement (°C))]

Examples of the component (A) include compounds represented by the following average composition formulae:

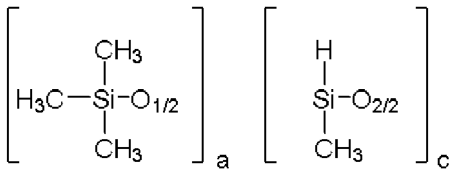

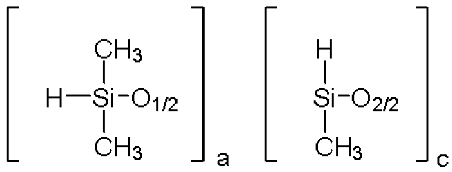

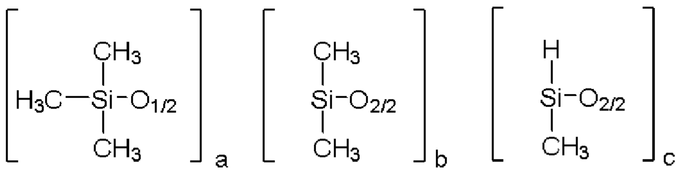

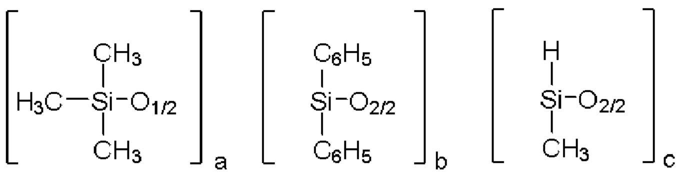

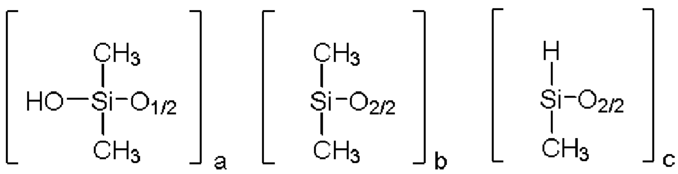

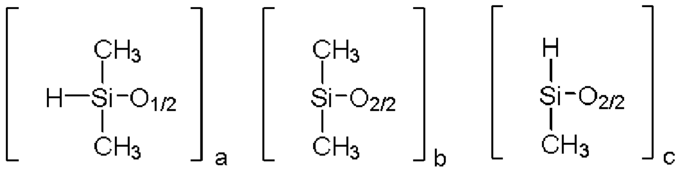

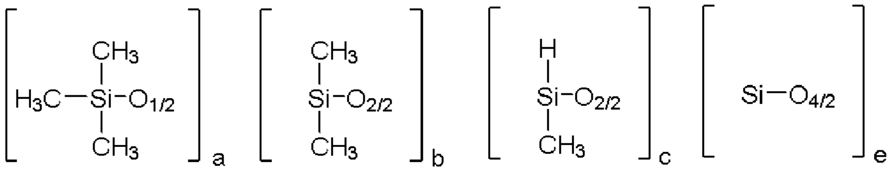

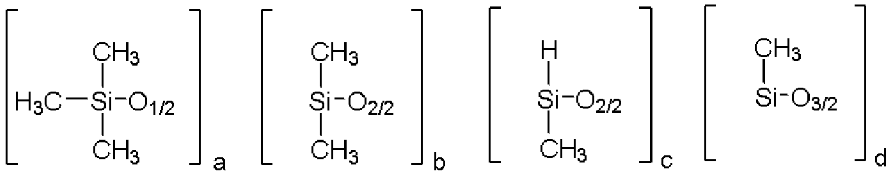

wherein a to e are the same as above.

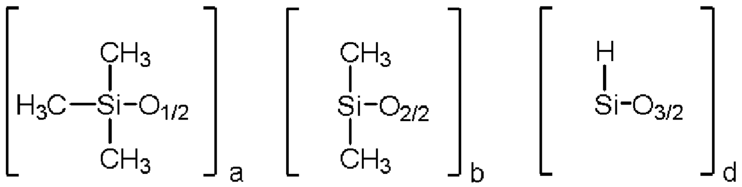

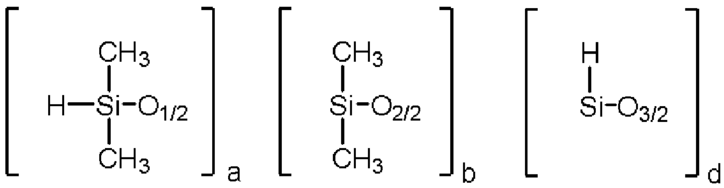

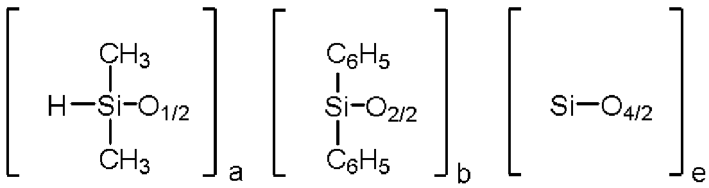

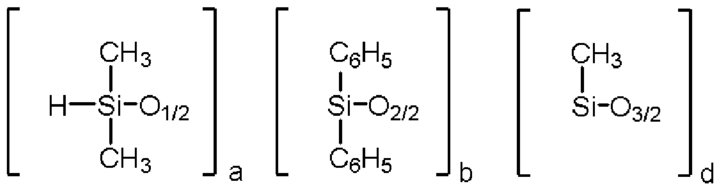

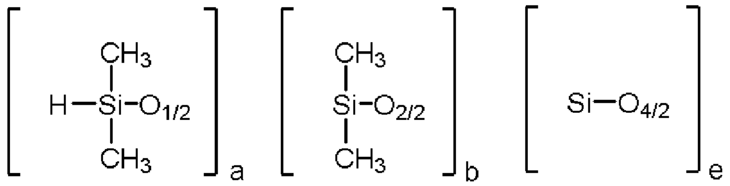

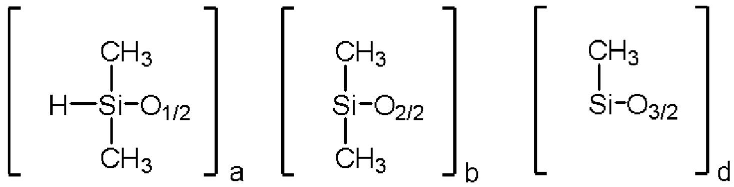

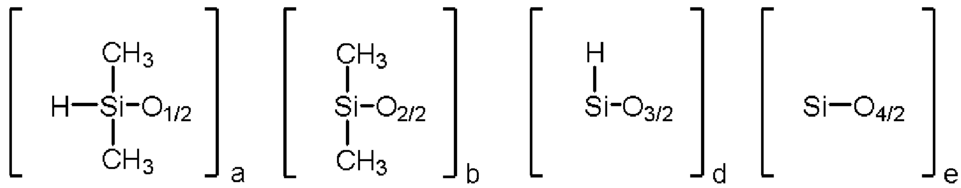

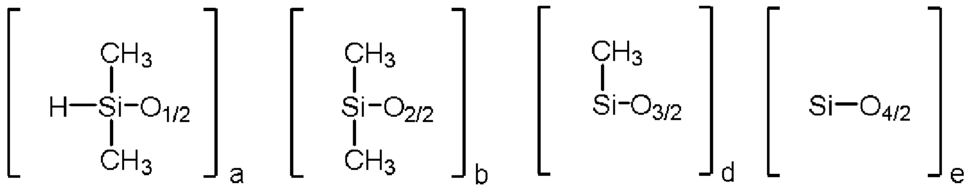

Specific examples include compounds represented by the following average composition formulae:

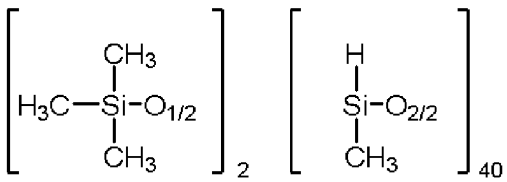

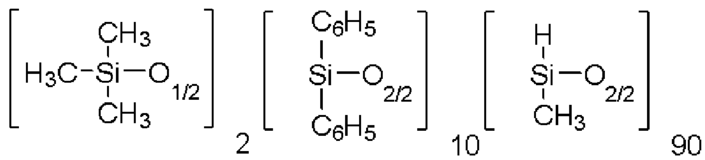

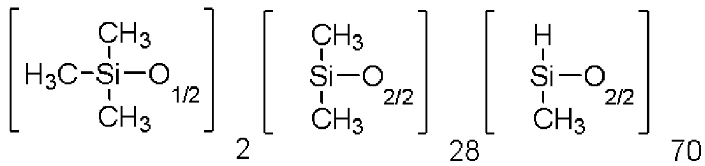

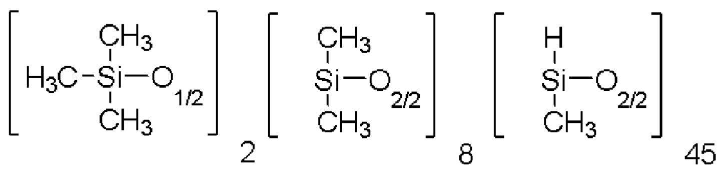

The component (A) above is an organohydrogen polysiloxane having a reactive group (a hydrogen atom directly

bonded to a silicon atom) in a molecule. It is believed that, since this reactive group is reacted and chemically bonded firmly with a substrate such as a fiber with the catalyst of the component (D) described later, excellent water repellency with excellent durability can be imparted.

[Component (B)]

The component (B) of the present invention is an organopolysiloxane being represented by the following average composition formula (2) and having a viscosity of 300,000 mPa·s or more at 25°C.

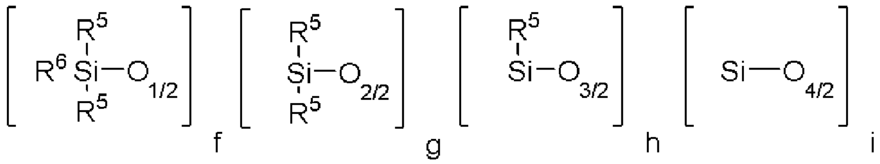

(2)

wherein, $R^5$ is each independently a hydrogen atom or a substituted or unsubstituted monovalent organic group having 1 to 20 carbon atoms, $R^6$ is each independently a group selected from the options of $R^5$, a hydroxy group, or an alkoxy group having 1 to 20 carbon atoms, and f, g, h, and i are values satisfying a viscosity of the organopolysiloxane of 300,000 mPa·s or more at 25°C and satisfy $f \geq 2$, $h \geq 1$, $i \geq 0$, and a ratio (g/h) of g to h of $50 \leq (g/h) \leq 1,000$.

The viscosity of the component (B) is a measured value when measured using a BM-type or BH-type rotary viscometer at 25°C. This viscosity is measured as it is when the viscosity can be measured with the component (B) in a liquid form, and measured as 5% or 10% toluene solution viscosity when the viscosity is too high to be measured. The viscosity of all that cannot be measured because the viscosity is too high even after toluene dilution, that cannot be measured because of wrapping around the rotor of a BM-type or BH-type rotary viscometer, or that cannot be measured because of insolubility in toluene is 300,000 mPa·s or more.

$R^5$ is each independently a hydrogen atom or a substituted or unsubstituted monovalent organic group having 1 to 20 carbon atoms. The monovalent organic group having 1 to 20 carbon atoms may be any of linear, branched, or cyclic, and specific examples thereof include an alkyl group such as methyl, ethyl, propyl, butyl, pentyl, hexyl, heptyl, octyl, nonyl, decyl, dodecyl, tetradecyl, hexadecyl, octadecyl, cyclopentyl, cyclohexyl, and cycloheptyl; an aryl group such as phenyl, tolyl, and naphthyl; an alkenyl group such as vinyl or allyl; and those in which a part of a hydrogen atom in the organic group structure of these is substituted with a halogen atom or an organic group containing a polar group such as amino, acryloxy, methacryloxy, epoxy, and mercapto. Here, it is industrially and characteristically desirable that 80% or more of $R^5$ is a methyl group, and it is preferable that at least one of $R^5$ is a phenyl group.

$R^6$ is each independently a group selected from the option of $R^5$, a hydroxy group, or an alkoxy group having 1 to 20 carbon atoms.

The alkoxy group having 1 to 20 carbon atoms may be any of linear, branched, or cyclic, and specific examples include a methoxy group, an ethoxy group, a propanoxy group, a butoxy group, a pentyloxy group, a hexyloxy group, an octyloxy group, a decyloxy group, a dodecyloxy group, and a 2-ethylhexyloxy group, preferably a methoxy group, an ethoxy group, a propanoxy group, a butoxy group, and a pentyloxy group, and more preferably a methoxy group, an ethoxy group, and a propanoxy group.

When a reactive functional group is present in the above average composition formula (2), the reactive functional group may be reacted with other compounds. Specifically, when an amino group is present in the above average composition formula (2), it may be reacted by an open ring reaction with an epoxy group-containing polyoxyalkylene compound or an epoxy group-containing alkyl compound, and may also be reacted by an acetylation reaction with a carboxylic acid anhydride such as anhydrous acetic acid, anhydrous propionic acid, anhydrous oxalic acid, anhydrous succinic acid, anhydrous maleic acid, anhydrous phthalic acid, and anhydrous benzoic acid. When an epoxy group is present in the above average composition formula (2), it may be reacted by an open ring reaction with an amino group-containing compound. The reaction with the reactive functional group described above is not limited to these.

f, g, h, and i in the above average composition formula (2) are values satisfying a viscosity of the polyorganosiloxane of 300,000 mPa·s or more at 25°C. This viscosity is measured as it is when the viscosity can be measured with the polyorganosiloxane in a liquid form, and measured as 5% toluene solution viscosity when the viscosity is too high to be measured. There are some cases that the viscosity cannot be measured because of too high viscosity after 5% toluene dilution, because of wrapping around the rotor of a BM-type or BH-type rotary viscometer, or because of insolubility in toluene. It is more preferable that the value satisfies 3.5 mPa·s or more in 5% toluene solution viscosity, and it is further preferable that the viscosity cannot be measured even in the 5% toluene solution form. The values also satisfy $f \geq 2$, $h \geq 1$, $i \geq 0$, and a ratio (g/h) of g to h of $50 \leq (g/h) \leq 1,000$. The (g/h) is preferably 70 to 950, more preferably 70 to 500, and particularly preferably 100 to 400.

g in the above average composition formula (2) is typically 50 or more, and preferably can be a value of 100 or

more. It should be noted that the number of crosslinking units increases when the value of h + i is large, thus the viscosity may be 300,000 mPa·s or more even when g is 50 or less.

The above ratio (g/h) is a parameter that affects flexibility and water repellency after washing. In the present invention, by setting (g/h) to an appropriate range, both flexibility and water repellency after washing can be achieved. When the value of (g/h) is less than 50, the crosslinking density of the component (B) becomes too high, and the texture and flexibility when applied to the substrate are reduced. Conversely, when the value of (g/h) is greater than 1,000, water repellency after washing is reduced.

The component (B) can be obtained, for example, by emulsifying an organopolysiloxane having an OH group at the end in the presence of a surfactant and water, and further polymerizing it with the addition of a catalyst, as described in JP 2016-166324 A.

Specific examples of the component (B) include, but are not limited to, the following average composition formulae. f, g, h, i, j and k in the following average composition formulae are values satisfying a viscosity of the polyorganosiloxane of 300,000 mPa·s or more at 25°C and satisfy $f \geq 2$, $h + k \geq 1$, $i \geq 0$, and the ratio $(g + j) / (h + k)$ of $(g + j)$ to $(h + k)$ is $50 \leq (g + j) / (h + k) \leq 1{,}000$. Note that f, g, h, i, j and k in the following average composition formulae are applied here only.

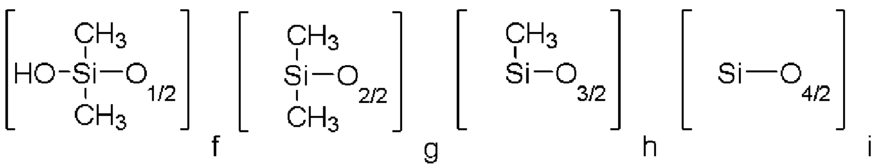

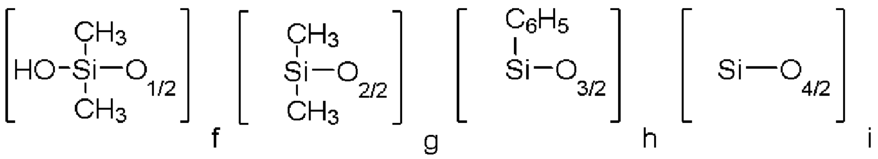

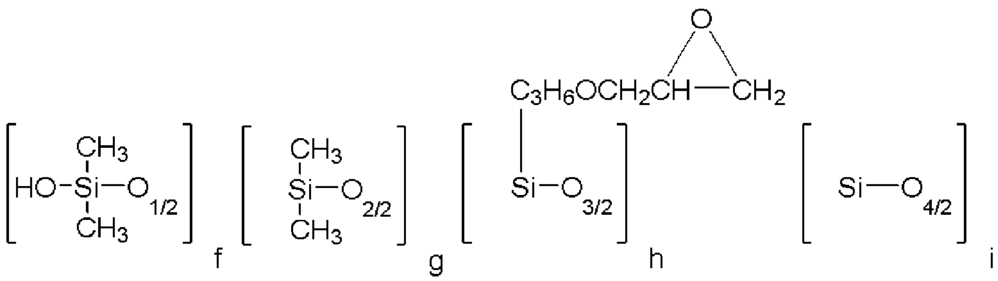

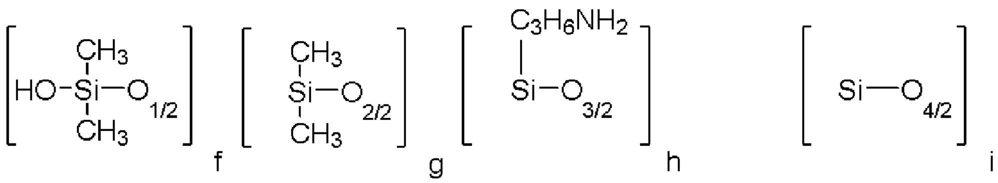

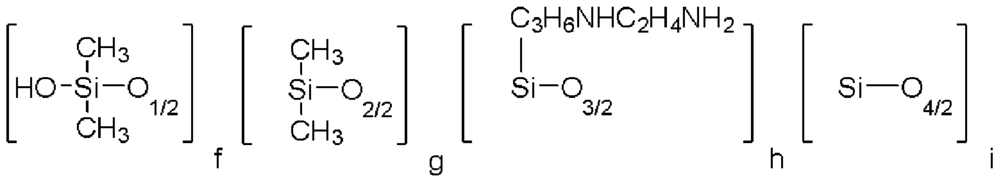

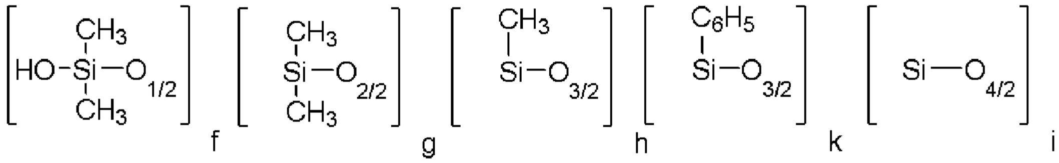

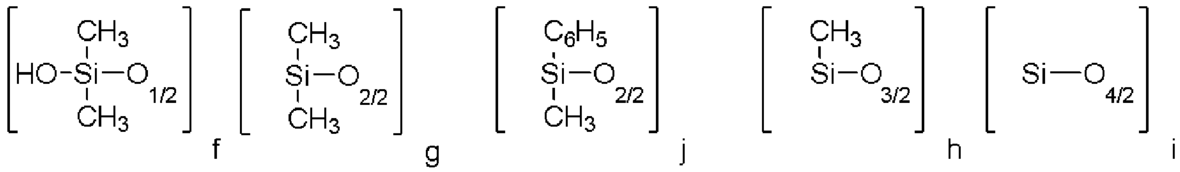

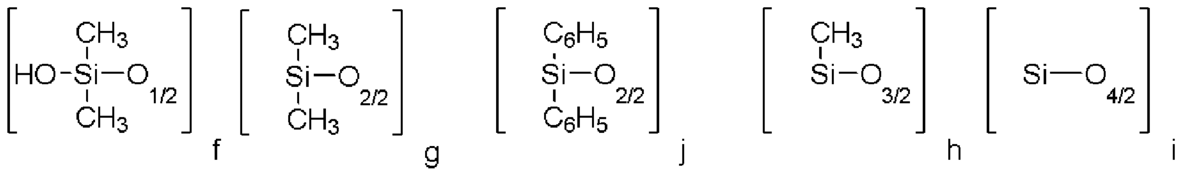

Specific examples include those represented by the following average composition formulae:

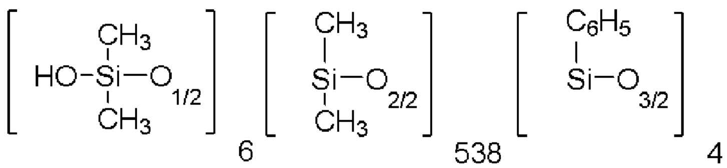

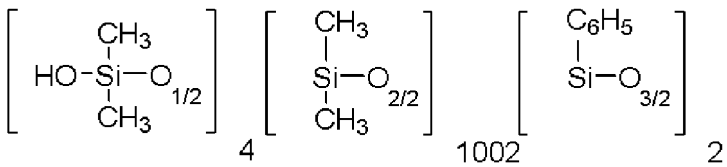

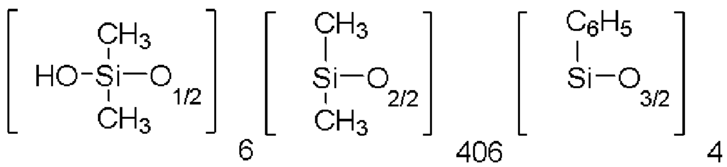

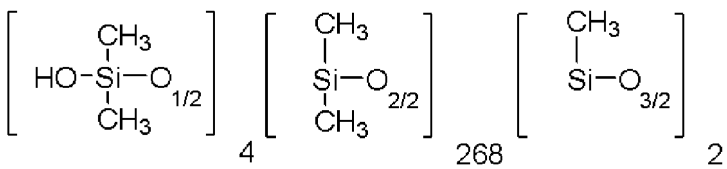

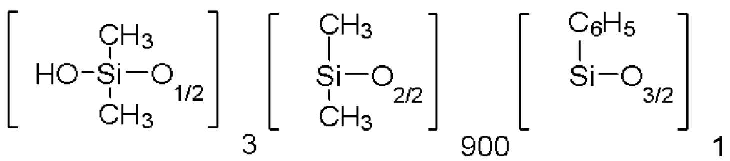

In the present invention, it is preferable that each content of octamethylcyclotetrasiloxane (D4), decamethylcyclopentasiloxane (D5), and dodecamethylcyclohexasiloxane (D6) is less than 3,000 ppm based on 100 parts by mass of the component (B). It is more preferable that each content is less than 2,000 ppm and particularly preferably less than 1,000 ppm. The lower limit can be 0 ppm.

Such compositions are desirable since these low-molecular weight cyclic siloxanes are of concern as environmentally hazardous substances, and regulations for them are being strengthened in various countries.
The contents of D4, D5, and D6 may be determined as follows, for example.

(Quantitative method)

To 10 mL of acetone, 0.1 g of a measurement sample is added, and low-molecular weight cyclic siloxanes are extracted into the acetone solution by shaking, and then the supernatant of the acetone solution is measured by gas chromatography. The column of the gas chromatography used is DB-5MS (manufactured by Agilent Technologies, Inc.), the temperature in the column at the measurement is 300°C, and tetradecane is used as the internal standard material.
The formulation amount of the component (B) is 10 to 100 parts by mass, preferably 20 to 80 parts by mass, more preferably 30 to 75 parts by mass, and further preferably 40 to 70 parts by mass based on 100 parts by mass of the component (A). When the amount is less than 10 parts by mass, the water repellency after washing is reduced, and when the amount is more than 100 parts by mass, the texture of the fiber is reduced.
In the present invention, when a hydrogen gas generation amount of the component (A) in terms of 0°C and 101.325 kPa is defined as X (mL/g) and a ratio (g/h) of g to h of the component (B) is defined as Y, X/Y is in a range of $0.30 \leq (X/Y) \leq 4.50$. X/Y is preferably $0.30 \leq (X/Y) \leq 3.50$, more preferably $0.35 \leq (X/Y) \leq 3.40$, and particularly preferably $0.50 \leq (X/Y) \leq 3.00$.
When (X/Y) is outside the above range, the water repellency after washing is reduced or the flexibility of the fiber after treatment is reduced.
The hydrogen gas generation amount X of the component (A) corresponds to the amount of the hydrogen atom (Si-H group) directly bonded to the silicon atom of the component (A). The hydrogen atom reacts with a reactive functional group on a subject to be treated such as a fiber, thereby chemically bonding the component (A) with the subject to be treated. Y corresponds to a ratio (D/T ratio) of the number of D units to the number of T units of the organopolysiloxane of the component (B).
In the present invention, it is possible to achieve both flexibility and water repellency by setting the above ratio (X/Y) to an appropriate range. When the value of (X/Y) is less than 0.30, the water repellency is inferior, and when the value of (X/Y) is greater than 4.50, the flexibility and texture when applied to a substrate such as a fiber are reduced. Thus, the present invention has an excellent effect of imparting water repellency and can impart good flexibility and texture to fibers after treatment by balancing the amount of the Si-H group of the component (A) and the D/T ratio of the component (B) organopolysiloxane.

[Component (C)]

The surfactant of the component (C) of the present invention is not particularly limited, and examples thereof include a non-ionic surfactant, an anionic surfactant, a cationic surfactant, and an amphoteric surfactant. One kind of these can be used singly or two or more kinds thereof can be used in appropriate combination.
Examples of the non-ionic surfactant include a polyoxyethylene alkyl ether, a polyoxyethylene polyoxypropylene alkyl ether, a polyoxyethylene alkyl phenyl ether, a polyethylene glycol fatty acid ester, a sorbitan fatty acid ester, a polyoxyethylene sorbitan fatty acid ester, a polyoxyethylene sorbitan fatty acid ester, a glycerin fatty acid ester, a polyoxyethylene glycerin fatty acid ester, a polyglycerin fatty acid ester, a propylene glycol fatty acid ester, a polyoxyethylene castor oil, a polyoxyethylene hydrogenated castor oil, a polyoxyethylene hydrogenated castor oil fatty acid ester, a polyoxyethylene alkylamine, a polyoxyethylene fatty acid amide, a polyoxyethylene modified organopolysiloxane, and a polyoxyethylene polyoxypropylene modified organopolysiloxane.
From the viewpoint of the stability of the emulsion, when a non-ionic (nonionic) surfactant is used, the HLB value (or the HLB value of the entire mixture when a plurality of surfactants are used) is preferably in the range of 8.0 to 20.0, more preferably 11.0 to 17.0, and further preferably 12.0 to 16.0. The HLB is a value calculated by the griffin method.
When two kinds of surfactants having different HLB values are used, the HLB value is calculated from the following formula.

$$N = N1 \times W1 + N2 \times W2$$

N: HLB value when two kinds of surfactants having different HLB values are used
N1, N2: HLB value of each surfactant
W1, W2: mass fraction of each surfactant (W1 + W2 = 1)

Examples of the anionic surfactant include an alkyl sulfate ester salt such as sodium lauryl sulfate, a polyoxyethylene alkyl ether sulfate ester salt, a polyoxyethylene alkyl phenyl ether sulfate ester salt, an alkyl benzene sulfonate

salt, a polyoxyethylene alkyl phenyl ether sulfonate salt, an alkyl diphenyl ether disulfonate salt, an alkanesulfonate salt, an N-acyl taurate salt, a dialkyl sulfosuccinate salt, a monoalkyl sulfosuccinate salt, a polyoxyethylene alkyl ether sulfosuccinate salt, a fatty acid salt, a polyoxyethylene alkyl ether carboxylate salt, an N-acyl amino acid salt, a monoalkyl phosphate ester salt, a dialkyl phosphate ester salt, and a polyoxyethylene alkyl ether phosphate ester salt.

Examples of the cationic surfactant include an alkyltrimethylammonium salt, a dialkyl dimethylammonium salt, a polyoxyethylene alkyl dimethylammonium salt, a dipolyoxyethylene alkyl methylammonium salt, a tripolyoxyethylene alkylammonium salt, an alkylbenzyl dimethylammonium salt, an alkyl pyridinium salt, a monoalkylamine salt, and a monoalkylamideamine salt.

Examples of the amphoteric surfactant include an alkyl dimethylamine oxide, an alkyl dimethyl carboxybetaine, an alkyl amidopropyl dimethyl carboxybetaine, an alkyl hydroxysulfobetaine, and an alkyl carboxymethyl hydroxyethyl imidazolinium betaine.

In the present invention, it is preferable that the (C) surfactant contains a cationic surfactant, and particularly preferable that the (C) surfactant contains cationic surfactants represented by the following formulae (C-1) and (C-2).

(C-1) a cationic surfactant represented by $Q^1{}_3(CH_3)N^+ \cdot X^-$

(C-2) a cationic surfactant represented by $Q^2(CH_3)_3N^+ \cdot X^-$

wherein, $Q^1$ is the same or different and is a monovalent organic group having 6 to 30 carbon atoms, $Q^2$ is a monovalent organic group having 17 to 30 carbon atoms, and X is each independently a halogen atom or a monovalent carboxyl group having 1 to 6 carbon atoms.

Specific examples of $Q^1$ include an alkyl group such as hexyl, heptyl, octyl, nonyl, decyl, undecyl, dodecyl, tridecyl, tetradecyl, pentadecyl, hexadecyl, heptadecyl, octadecyl, nonadecyl, eicosyl, docosanyl, cyclohexyl, and cycloheptyl, an aryl group such as phenyl, benzyl, tolyl, and naphthyl, and an alkenyl group such as oleyl. Among them, octyl, dodecyl, hexadecyl, and octadecyl are preferred.

$X^-$ is a halogen ion or a monovalent carboxyl ion having 1 to 6 carbon atoms, and specific examples include a halogen ion such as $Cl^-$, $Br^-$, and $I^-$ and a carboxyl ion such as $HCOO^-$, $CH_3COO^-$, and $C_2H_5COO^-$. Among them, $Cl^-$, $Br^-$, $HCOO^-$, and $CH_3COO^-$ are preferred.

$Q^2$ is a monovalent organic group having 17 to 30 carbon atoms, and preferably a monovalent organic group having 18 to 28 carbon atoms. When $Q^2$ has 17 or more carbon atoms, compatibility with the cationic surfactant represented by (B-1) is good and emulsion stability is good. When $Q^2$ has 30 or less carbon atoms, the emulsifying ability as a surfactant is sufficient, and stable emulsion can be obtained as in $Q^1$. The $X^-$ of $Q^2$ is the same as the $X^-$ of $Q^1$ described above.

Specific examples of the component (C-1) include, but are not limited to, trihexylmethylammonium chloride, triheptylmethylammonium chloride, trioctylmethylammonium chloride, trinonylmethylammonium chloride, tridecylmethylammonium chloride, trilaurylmethylammonium chloride, trioctylmethylammonium acetate, and trilaurylmethylammonium acetate.

Specific examples of the component (C-2) include, but are not limited to, stearyl trimethyl ammonium chloride, icosyl trimethyl ammonium chloride, behenyl trimethyl ammonium chloride, stearyl trimethyl ammonium acetate, icosyl trimethyl ammonium acetate, and behenyl trimethyl ammonium acetate.

Since the component (C-1) is more hydrophobic than the component (C-2), it is more frequently in contact with the polyorganosiloxane components (A) and (B) and can be expected to have a higher effect of enhancing dispersibility, while the component (C-1) may be too hydrophobic to have sufficient emulsifying ability. Thus, it is believed that the stability of the emulsion can be enhanced by using the component (C-2) in combination with the component (C-1), where the component (C-2) has higher emulsifying ability than the component (C-1).

The formulation amount of the component (C) is 0.5 to 50.0 parts by mass, preferably 1.0 to 25 parts by mass, more preferably 1.5 to 20 parts by mass, and further preferably 5.0 to 15.0 parts by mass based on 100 parts by mass of the component (A). When the amount of the component (C) is too little, the emulsification is difficult, while when the amount of the component (C) is too much, water repellency is reduced.

[Component (D)]

The component (D) of the present invention is a condensation reaction catalyst for promoting the reaction between a hydrogen atom directly bonded to a silicon atom of the component (A) and a reactive functional group on a fiber. One kind of the component (D) can be used singly or two or more kinds thereof can be used in appropriate combination. Examples of the condensation reaction catalyst include a compound of various metals such as tin, zinc, bismuth, titanium, zirconium, aluminum, iron, and lead. Among them, in view of high catalytic activity and availability, a compound of one or more metals selected from tin, zinc, bismuth, titanium, iron, zirconium, and aluminum are preferred, and a compound of one or more metals selected from tin, zinc, and titanium are more preferred. A compound of one or more metals selected

from zinc and titanium are particularly preferred from the viewpoint of environmental impact.

The compound of the metal of the component (D) is a salt and/or complex based on the above metal ion as a central element, and preferably has at least one selected from a carboxylic acid having an alkyl group having 1 to 30 carbon atoms, a ketone, an ester, a chloride ion, a bromide ion, and an iodide ion as a counter ion and/or a ligand. Examples of the alkyl group include a methyl group, an isopropyl group, a butyl group, a 2-ethylhexyl group, an octyl group, an isodecyl group, an isostearyl group, a decanyl group, and a cetyl group.

Specific examples of the component (D) include a carboxylic acid metal salt such as bis(2-ethylhexanoic acid)tin, bis(2-ethylhexanoic acid) zinc, zinc laurate, zinc acetate, zirconium acetate, zinc formate, bis(2-ethylhexanoic acid)iron, tris(2-ethylhexanoic acid)iron, bis(2-ethylhexanoic acid) zirconium, tetra(2-ethylhexanoic acid)zirconiumm, tris(2-ethylhexanoic acid)bismuth, and versatic acid tin, dibutyl tin dilaurate, dibutyl tin maleate, dibutyl tin phthalate, dibutyl tin dioctanoate, dibutyl tin bis(2-ethylhexanoate), dibutyl tin bis(methyl maleate), dibutyl tin bis(ethyl maleate), dibutyl tin bis(butyl maleate), dibutyl tin bis(octyl maleate), dibutyl tin bis(tridecyl maleate), dibutyl tin bis(benzyl maleate), dibutyl tin diacetate, dioctyl tin bis(ethyl maleate), dioctyl tin bis(octyl maleate), dibutyl tin dimethoxide, dibutyl tin bis(nonyl phenoxide), dibutenyl tin oxide, dibutyl tin bis(acetyl acetonate), dibutyl tin bis(ethyl acetoacetate), a reaction product of dibutyl tin oxide and a silicate compound, a reaction product of a silicate compound and a dialkyl tin dicarboxylate such as dibutyl tin dilaurate, dioctyl tin dilaurate, dibutyl tin dineodecanoate or dioctyl tin dineodecanoate, a tetravalent organic tin compound such as a reaction product of dibutyl tin oxide and phthalate ester, an organic titanate such as tetraisopropoxy titanium, tetra n-butoxy titanium, diisopropoxy titanium bis(acetyl acetonate), or diisopropoxy titanium bis(ethyl acetoacetate): an organic aluminum compound such as aluminum tris(acetyl acetonate), aluminum tris(ethyl acetoacetate), and diisopropoxyaluminium ethyl acetoacetate; and a zirconium compound such as zirconium tetrakis(acetyl acetonate).

As the component (D), the zinc compounds are preferred, and zinc bis(24-ethylhexanoate), zinc laurate, zinc acetate, and zinc formate are particularly preferred.

The formulation amount of the component (D) is 5 to 100 parts by mass, preferably 10 to 80 parts by mass, and more preferably 15 to 60 parts by mass, based on 100 parts by mass of the component (A). When the amount of the component (D) is less than 5 parts by mass, the water repellency is reduced, and when it is more than 100 parts by mass, the flexibility and texture are reduced.

[Component (E)]

The component (E) of the present invention is water. The formulation amount of water is 50 to 3,000 parts by mass, preferably 50 to 2,000 parts by mass, based on 100 parts by mass of the component (A).

[Component (F)]

The water repellent composition of the present invention may further contain a (F) polyfunctional isocyanate compound.

The component (F) of the present invention is a polyfunctional isocyanate compound having two or more isocyanate groups in a molecule. The polyfunctional isocyanate compound is not particularly limited as long as it is a compound having two or more isocyanate groups in a molecule, and the known ones can be used. One kind of the component (F) can be used singly or two or more kinds thereof can be used in combination. Specific examples include a polymer of various diisocyanates such as tolylene diisocyanate, diphenylmethane diisocyanate, m-xylylene diisocyanate, $\alpha,\alpha,\alpha'$, $\alpha'$-tetramethyl-m-xylylene diisocyanate, tetramethylene-1,4-diisocyanate, pentamethylene-1,5-diisocyanate, hexamethylene diisocyanate, 2,2,4-trimethyl-hexamethylene-1,6-diisocyanate, lysine diisocyanate, isophorone diisocyanate, 1,3-bis(isocyanate methyl)-cyclohexane, and 4,4-dicyclohexylmethane diisocyanate, and a polyisocyanate having an isocyanurate structure consisting of these. Further examples include a polyisocyanate obtained by reacting various diisocyanates described above with various polyols such as ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, 2,2-diethyl-1,3-propanediol, glycerin, trimethylolpropane, pentaerythritol, polyester polyol, polyether polyol, acrylic polyol and polyolefin polyol, a polyisocyanate having a biuret structure obtained by reacting a polyisocyanate with water, and a polyisocyanate obtained by cyclotrimerizing a diisocyanate as described above and having an isocyanurate structure. A polyisocyanate obtained by reacting the various polyisocyanates described above and the various polyols described above can also be used.

A blocked isocyanate compound in which the isocyanate group is blocked with a blocking agent can also be used. The blocked isocyanate compound is also not particularly limited, and the known ones can be used. The blocked polyisocyanate can be prepared by reacting a known variety of polyisocyanate compounds with a known variety of

blocking agents. Examples of the blocking agent include an alcohol-based compound, an alkyl phenol-based compound, a phenol-based compound, an active ethylene-based compound, a mercaptan-based compound, an acid amide-based compound, an acid imide-based compound, an imidazole-based compound, a urea-based compound, an oxime-based compound, an amine-based compound, an imide-based compound, and a pyrazole-based compound.

The formulation amount of the component (F) is preferably 1 to 50 parts by mass, more preferably 5 to 40 parts by mass, and further preferably 10 to 40 parts by mass, based on 100 parts by mass of the component (A).

The component (F) contains an isocyanate group, thus it is possible to react and crosslink with various reaction groups. The reactive group contained in the component (A) and the component (B) (such as a hydro silyl group, a hydroxy group, or an alkoxy group) can react and crosslink (chemically bond) with the isocyanate group of the component (F). Furthermore, the isocyanate group can also react with the reactive group contained in the substrate to be treated. Thus, when the composition contains the component (F), it is believed that a stronger film can be formed, and it is possible to improve the water repellency after repeated washing.

[Other components]

The water repellent composition of the present invention can appropriately contain a solvent, a thickening agent, a pigment, a dye, a penetrating agent, an antistatic agent, an antifoaming agent, a flame retardant, an antimicrobial agent, a preservative, a cross-linking agent, an adhesion improving agent, another silicone oil, a silicone resin, an acrylic resin, and a urethane resin, as needed.

Examples of the solvent include an ether-based solvent such as dibutyl ether, dioxane, or tetrahydrofuran, a ketone-based solvent such as acetone or methyl ethyl ketone (MEK), an alcohol-based solvent such as methanol, ethanol, 2-propanol, n-butanol, sec-butanol, 2-ethyl-1-hexanol, 2-methoxyethanol, 2-ethoxyethanol, 2-butoxyethanol, ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4- pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, or 2,2-diethyl-1,3-propanediol, and an aromatic solvent such as toluene or xylene. One kind of these solvents may be used singly or two or more kinds thereof may be used in combination.

(Fluorine compound)

In the water repellent composition of the present invention, a content of the fluorine compound is preferably less than 1 part by mass, more preferably less than 0.5 parts by mass, and further preferably less than 0.1 parts by mass based on 100 parts by mass of the component (A). In particular, it is preferable that the water repellent composition of the present invention does not contain a fluorine compound, but may unintentionally contain a trace amount of the fluorine compound as an impurity or the like contained in the raw material.

In the water repellent composition of the present invention, it is preferable that a content of the amino-modified silicone is less than 10 parts by mass, more preferably less than 5 parts by mass, and further preferably less than 1 part by mass based on 100 parts by mass of the component (A). In particular, it is preferable that the water repellent composition of the present invention does not contain an amino-modified silicone, but may unintentionally contain the silicone as an impurity or the like contained in the raw material. When the amino-modified silicone is within the above range, the treated fiber product and substrate do not yellow.

[Method of preparing composition]

The preparation method of the water repellent composition of the present invention is not particularly limited, and the water repellent composition may be prepared in accordance with the conventionally known emulsification polymerization method and phase conversion emulsification method. Each component may be emulsified separately and mixed, or each component may be mixed and emulsified together. For example, an emulsion containing the component (A) and an emulsion containing the component (B) may be prepared separately, and then mixed, or an emulsion containing the component (A) and the component (B) may be prepared by mixing and emulsifying the component (A) and the component (B).

The emulsifier that can be used is not particularly limited, and examples thereof include a homo mixer, a homogenizer, a colloid mill, a universal mixing stirrer, a combi mixer, and a line mixer. The type of the obtained emulsion is not particularly limited, and may be an O/W type emulsion, a W/O type emulsion, or the like.

When preparing the emulsion, an acid such as acetic acid, lactic acid, hydrochloric acid, sulfuric acid, or citric acid, and a base such as potassium hydroxide, sodium hydroxide, sodium carbonate, potassium acetate, or triethanolamine can be used as a pH adjustment agent. In addition, a silicone oil, a hydrocarbon-based oil, or the like can be used as

a viscosity adjusting agent.

[Use]

The water repellent composition of the present invention is used for treatment on the surface of various substrates such as fibers, paper, metal, wood, rubber, plastic, and glass. As the method for applying the composition to the substrate, various conventionally known coating methods can be used, and examples thereof include a dipping method, a spraying method, a roll coating method, a bar coating method, and a brush coating method.

The application amount of the water repellent composition is not particularly limited, but usually the application amount is 0.1 to 200 g/$m^2$, preferably 1 to 100 g/$m^2$ as the water repellent composition. After application, an organopolysiloxane film can be obtained by drying alone, and this drying may be any drying as long as the water is volatile, such as drying of 1 to 3 days at room temperature, or drying of about 1 to 30 minutes at 100 to 180°C when heated.

[Fiber treatment agent]

The water repellent composition of the present invention is useful as an active ingredient of a fiber treatment agent, because the fiber surface after treatment has excellent water repellency. The water repellent composition may be used as a fiber treatment agent as it is, or may be appropriately contained in a fiber treatment agent in the range of, for example, 0.01 to 99% by mass. Here, other components in the fiber treatment agent include a fiber agent such as an antiwrinkle agent, a flame retardant, an antistatic agent, or a heat resistant agent, an antioxidant, an ultraviolet absorber, a pigment, a metal powder pigment, a rheology control agent, a curing accelerator, a deodorant, and an antimicrobial agent.

When a fiber is treated, the fiber treatment agent may be diluted for use, and the formulation amount of the water repellent composition in the dilution of the fiber treatment agent to treat the fiber is preferably 0.01 to 10% by mass, and more preferably 0.1 to 7% by mass, as a solid.

The water repellent composition and the fiber treatment agent of the present invention are effective for all, including not only natural fibers such as cotton, silk, hemp, wool, angora, and mohair, but also synthetic fibers such as polyester, nylon, acrylic, urethane, and spandex, and fiber products using these. There is no limitation on the form and shape of the subject to be treated, and not only those having the shape of raw materials such as staples, filaments, tows, and yarns, but also those in various processed forms such as woven fabric, knitted fabric, stuffed cotton, non-woven fabric, paper, sheet, and film are subjects that can be treated by the fiber treatment agent of the present invention.

The water repellent composition and the fiber treatment agent of the present invention are also applicable to substrates other than fibers. Examples of the substrate to which the water repellent composition or the fiber treatment agent can be applied include inorganic porous materials such as concrete, lightweight concrete, aerated lightweight concrete (ALC), mortar, various cement boards, gypsum boards, calcium silicate boards, bricks, roof tiles, tiles, and stones. The water repellent composition and the fiber treatment agent of the present invention can also be applied to walls using diatomaceous earth, clay, plaster or the like as the main material, and organic porous materials of paper, wood, leather, or the like.

EXAMPLE

Hereinafter, the present invention will be described in detail by way of Examples and Comparative Examples, but the present invention is not limited to the following Examples. In the following examples, "%" of the composition indicates % by mass unless otherwise stated.

[Production Example A-1]

(A) Organohydrogen polysiloxane represented by the following average composition formula (A-1) (viscosity at 25°C: 20 mPa·s, hydrogen gas generation amount: 340 mL/g), in an amount of 60.00 parts by mass,

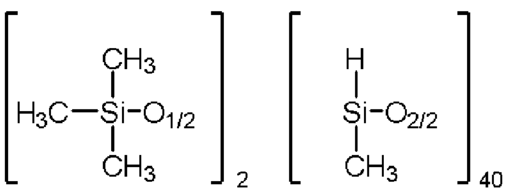

(A-1)

(C) Nonion K-204 (trade name): manufactured by NOF CORPORATION, polyoxyethylene lauryl ether, HLB value 9.7, in an amount of 1.20 parts by mass,

Nonion K-230 (trade name): manufactured by NOF CORPORATION, polyoxyethylene lauryl ether, HLB value 17.5, in an amount of 0.30 parts by mass, and
(E) ion-exchanged water in an amount of 38.50 parts by mass

were mixed, and emulsified and dispersed using a homo mixer, and then subjected to a high pressure treatment under the conditions of 30 MPa with a high pressure homogenizer to obtain a silicone emulsion composition (I-1).

[Production Example A-2]

(A) Organohydrogen polysiloxane represented by the following average composition formula (A-2) (viscosity at 25°C: 120 mPa·s, hydrogen gas generation amount: 270 mL/g) in an amount of 60.00 parts by mass,

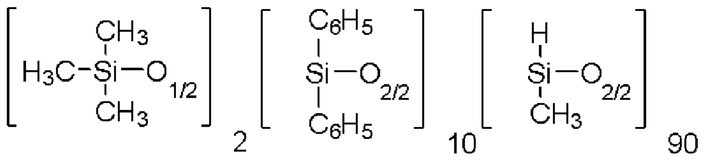

(A-2)

(C) Nonion K-204 in an amount of 1.20 parts by mass,
Nonion K-230 in an amount of 0.30 parts by mass, and
(E) ion-exchanged water in an amount of 38.50 parts by mass

were mixed, and emulsified and dispersed using a homo mixer, and then subjected to a high pressure treatment under the conditions of 30 MPa with a high pressure homogenizer to obtain a silicone emulsion composition (I-2).

[Production Example A-3]

(A) Organohydrogen polysiloxane represented by the following average composition formula (A-3) (viscosity at 25°C: 130 mPa·s, hydrogen gas generation amount: 240 mL/g), in an amount of 60.00 parts by mass,

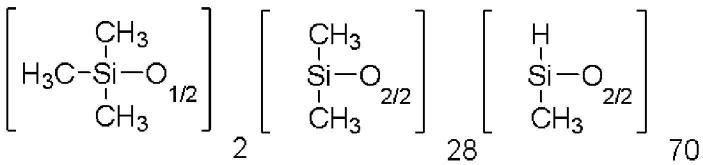

(A-3)

(C) Nonion K-204 in an amount of 1.20 parts by mass,
Nonion K-230 in an amount of 0.30 parts by mass and
(E) ion-exchanged water in an amount of 38.50 parts by mass

were mixed, and emulsified and dispersed using a homo mixer, and then subjected to a high pressure treatment under the conditions of 30 MPa with a high pressure homogenizer to obtain a silicone emulsion composition (I-3).

[Production Example A-4]

(A) Organohydrogen polysiloxane represented by the following average composition formula (A-4) (viscosity at 25°C: 45 mPa·s, hydrogen gas generation amount: 300 mL/g) in an amount of 60.00 parts by mass,

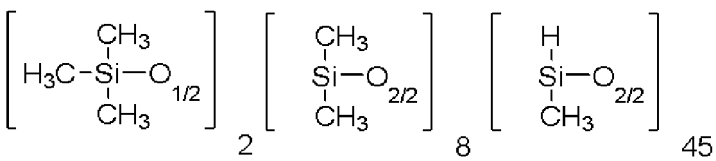

(A—4)

(C) Nonion K-204 in an amount of 1.20 parts by mass,
Nonion K-230, in an amount of 0.30 parts by mass and
(E) ion-exchanged water in an amount of 38.50 parts by mass

were mixed, and emulsified and dispersed using a homo mixer, and then subjected to a high pressure treatment under the conditions of 30 MPa with a high pressure homogenizer to obtain a silicone emulsion composition (I-4).

The silicone emulsion compositions (I-1) to (I-4) obtained in Production Examples A-1 to A-4 with the component A as the main component are shown in Table 1 below.

[Table 1]

| | | Production Example A-1 | Production Example A-2 | Production Example A-3 | Production Example A-4 |
|---|---|---|---|---|---|
| Silicone emulsion composition | | I-1 | I-2 | I-3 | I-4 |
| Component A | A-1 | 60.00 | | | |
| | A-2 | | 60.00 | | |
| | A-3 | | | 60.00 | |
| | A-4 | | | | 60.00 |
| Component C | Nonion K-204 | 1.20 | 1.20 | 1.20 | 1.20 |
| | Nonion K-230 | 0.30 | 0.30 | 0.30 | 0.30 |
| Component E | Water | 38.50 | 38.50 | 38.50 | 38.50 |
| Hydrogen gas generation amount of component A (mL/g) | | 340 | 270 | 240 | 300 |

[Production Example B-1]

40.00 g of organopolysiloxane with both terminal silanol groups blocked, having a viscosity of 1,500 mPa·s at 25°C and being previously treated by heating and mixing under reduced pressure of 10 mmHg or less at 150°C to reduce low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.29 g of triethoxyphenylsilane, 1.28 g of an ethanol product (TOMAC: manufactured by Linyi Connect Chemical Technology Co., Ltd.) containing 95% active ingredient trioctylmethylammonium chloride (component (C)), 1.20 g of an ethanol product (LIPOQUAD 22-80: manufactured by LION SPECIALTY CHEMICALS CO., LTD.) containing 80% active ingredient behenyltrimethylammonium chloride (component (C)), 3.20 g of polyoxyethylene (10) tridecyl ether (component (C)) (Newcol 1310: manufactured by NIPPON NYUKAZAI CO., LTD.), and 6.00 g of ion-exchanged water (component (E)) were uniformly emulsified and dispersed using a homo mixer and a disper to prepare an emulsion. To this emulsion, 37.64 g of ion-exchanged water was further added and uniformly dispersed using a homo mixer, and then an aqueous ammonia solution obtained by previously diluting 0.35 g of a 30% aqueous ammonia solution with 9.65 g of ion-exchanged water was added. After that, the liquid temperature was reduced to 15°C, polymerization was performed for 24 hours, and 0.39 g of acetic acid was added to neutralize to obtain an emulsion (II-1) containing organopolysiloxane (B-1) represented by the following average composition formula as the main component.

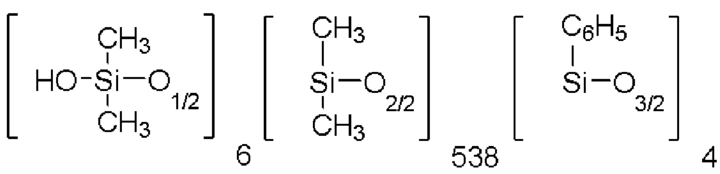

(B-1)

[Production Example B-2]

40.00 g of organopolysiloxane with both terminal silanol groups blocked, having a viscosity of 1,500 mPa·s at 25°C and being previously treated by heating and mixing under reduced pressure of 10 mmHg or less at 150°C to reduce low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.08 g of triethoxyphenylsilane, 1.28 g of an ethanol product (TOMAC: manufactured by Linyi Connect Chemical Technology Co., Ltd.) containing 95% active ingredient trioctylmethylammonium chloride (component (C)), 1.20 g of an ethanol product (LIPOQUAD 22-80: manufactured by LION SPECIALTY CHEMICALS CO., LTD.) containing 80% active ingredient behenyltrimethylammonium

chloride (component (C)), 3.20 g of polyoxyethylene (10) tridecyl ether (component (C)) (Newcol 1310: manufactured by NIPPON NYUKAZAI CO., LTD.), and 6.00 g of ion-exchanged water (component (E)) were uniformly emulsified and dispersed using a homo mixer and a disper to prepare an emulsion. To this emulsion, 37.85 g of ion-exchanged water was further added and uniformly dispersed using a homo mixer, and then an aqueous ammonia solution obtained by previously diluting 0.35 g of a 30% aqueous ammonia solution with 9.65 g of ion-exchanged water was added. After that, the liquid temperature was reduced to 15°C, polymerization was performed for 24 hours, and 0.39 g of acetic acid was added to neutralize to obtain an emulsion (II-2) containing organopolysiloxane (B-2) represented by the following average composition formula as the main component.

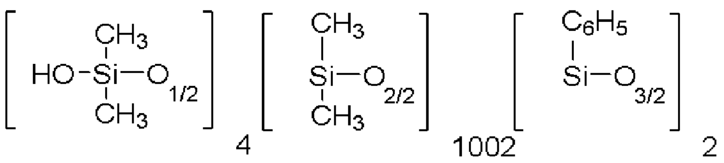

(B-2)

[Production Example B-3]

40.00 g of organopolysiloxane with both terminal silanol groups blocked, having a viscosity of 1,500 mPa·s at 25°C and being previously treated by heating and mixing under reduced pressure of 10 mmHg or less at 150°C to reduce low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.39 g of triethoxyphenylsilane, 1.28 g of an ethanol product (TOMAC: manufactured by Linyi Connect Chemical Technology Co., Ltd.) containing 95% active ingredient trioctylmethylammonium chloride (component (C)), 1.20 g of an ethanol product (LIPOQUAD 22-80: manufactured by LION SPECIALTY CHEMICALS CO., LTD.) containing 80% active ingredient behenyltrimethylammonium chloride (component (C)), 3.20 g of polyoxyethylene (10) tridecyl ether (component (C)) (Newcol 1310: manufactured by NIPPON NYUKAZAI CO., LTD.), and 6.00 g of ion-exchanged water (component (E)) were uniformly emulsified and dispersed using a homo mixer and a disper to prepare an emulsion. To this emulsion, 37.54 g of ion-exchanged water was further added and uniformly dispersed using a homo mixer, and then an aqueous ammonia solution obtained by previously diluting 0.35 g of a 30% aqueous ammonia solution with 9.65 g of ion-exchanged water was added. After that, the liquid temperature was reduced to 15°C, polymerization was performed for 24 hours, and 0.39 g of acetic acid was added to neutralize to obtain an emulsion (II-3) containing organopolysiloxane (B-3) represented by the following average composition formula as the main component.

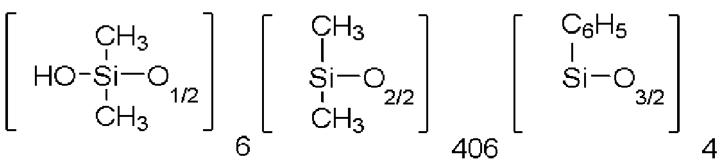

(B-3)

[Production Example B-4]

40.00 g of organopolysiloxane with both terminal silanol groups blocked, having a viscosity of 1,500 mPa·s at 25°C and being previously treated by heating and mixing under reduced pressure of 10 mmHg or less at 150°C to reduce low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.21 g of triethoxymethylsilane, 1.28 g of an ethanol product (TOMAC: manufactured by Linyi Connect Chemical Technology Co., Ltd.) containing 95% active ingredient trioctylmethylammonium chloride (component (C)), 1.20 g of an ethanol product (LIPOQUAD 22-80: manufactured by LION SPECIALTY CHEMICALS CO., LTD.) containing 80% active ingredient behenyltrimethylammonium chloride (component (C)), 3.20 g of polyoxyethylene (10) tridecyl ether (component (C)) (Newcol 1310: manufactured by NIPPON NYUKAZAI CO., LTD.), and 6.00 g of ion-exchanged water (component (E)) were uniformly emulsified and dispersed using a homo mixer and a disper to prepare an emulsion. To this emulsion, 37.72 g of ion-exchanged water was further added and uniformly dispersed using a homo mixer, and then an aqueous ammonia solution obtained by previously diluting 0.35 g of a 30% aqueous ammonia solution with 9.65 g of ion-exchanged water was added. After that, the liquid temperature was reduced to 15°C, polymerization was performed for 24 hours, and 0.39 g of acetic acid was added to neutralize to obtain an emulsion (II-4) containing organopolysiloxane (B-4) represented by the following average composition formula as the main component.

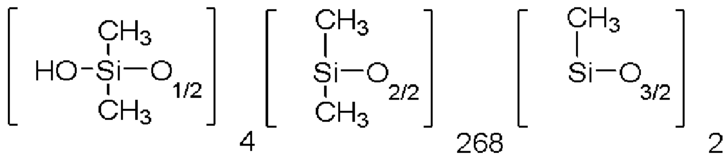

(B-4)

[Production Example B-5]

40.00 g of organopolysiloxane with both terminal silanol groups blocked, having a viscosity of 1,500 mPa·s at 25°C and being previously treated by heating and mixing under reduced pressure of 10 mmHg or less at 150°C to reduce low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.04 g of triethoxyphenylsilane, 1.28 g of an ethanol product (TOMAC: manufactured by Linyi Connect Chemical Technology Co., Ltd.) containing 95% active ingredient trioctylmethylammonium chloride (component (C)), 1.20 g of an ethanol product (LIPOQUAD 22-80: manufactured by LION SPECIALTY CHEMICALS CO., LTD.) containing 80% active ingredient behenyltrimethylammonium chloride (component (C)), 3.20 g of polyoxyethylene (10) tridecyl ether (component (C)) (Newcol 1310: manufactured by NIPPON NYUKAZAI CO., LTD.), and 6.00 g of ion-exchanged water (component (E)) were uniformly emulsified and dispersed using a homo mixer and a disper to prepare an emulsion. To this emulsion, 37.89 g of ion-exchanged water was further added and uniformly dispersed using a homo mixer, and then an aqueous ammonia solution obtained by previously diluting 0.35 g of a 30% aqueous ammonia solution with 9.65 g of ion-exchanged water was added. After that, the liquid temperature was reduced to 15°C, polymerization was performed for 24 hours, and 0.39 g of acetic acid was added to neutralize to obtain an emulsion (II-5) containing organopolysiloxane (B-5) represented by the following average composition formula as the main component.

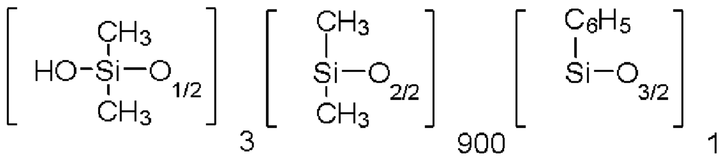

(B-5)

[Production Example B-6]

40.00 g of organopolysiloxane with both terminal silanol groups blocked, having a viscosity of 1,500 mPa·s at 25°C and reducing the low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.08 g of triethoxyphenylsilane, 1.20 g of polyoxyethylene lauryl ether (EO9 mol) (component (C)) (emalgen 109P: manufactured by Kao Chemicals), 1.80 g of sodium dodecylbenzenesulfonate (component (C)), and 2.40 g of ion-exchanged water (component (E)) were uniformly emulsified and dispersed using a homo mixer and a disper to prepare an emulsion. To this emulsion, 53.08 g of ion-exchanged water was further added and uniformly dispersed using a homo mixer, and then 0.48 g of concentrated hydrochloric acid was added. After that, the liquid temperature was reduced to 15°C, polymerization was performed for 24 hours, and 0.96 g of triethanolamine was added to neutralize to obtain an emulsion (II-6) containing organopolysiloxane (B-2) represented by the above following average composition formula as the main component.

[Production Example B-1-B]

An emulsion (II-1-B) containing the average composition formula (B-6) as the main component was obtained in the same manner as in Production Example B-1 except that 0.35 g of 30% aqueous ammonia solution in Production Example B-1 was changed to 1.15 g of 30% potassium hydroxide and ion-exchanged water to dilute 30% aqueous ammonia solution was changed to 8.85 g of ion-exchanged water to dilute 30% potassium hydroxide.

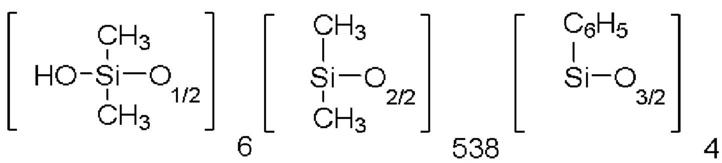

(B-6)

[Comparative Production Example B-7]

40.00 g of organopolysiloxane with both terminal silanol groups blocked, having a viscosity of 1,500 mPa·s at 25°C and being previously treated by heating and mixing under reduced pressure of 10 mmHg or less at 150°C to reduce low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.03 g of triethoxyphenylsilane, 1.28 g of an ethanol product (TOMAC: manufactured by Linyi Connect Chemical Technology Co., Ltd.) containing 95% active ingredient trioctylmethylammonium chloride (component (C)), 1.20 g of an ethanol product (LIPOQUAD 22-80: manufactured by LION SPECIALTY CHEMICALS CO., LTD.) containing 80% active ingredient behenyltrimethylammonium chloride (component (C)), 3.20 g of polyoxyethylene (10) tridecyl ether (component (C)) (Newcol 1310: manufactured by NIPPON NYUKAZAI CO., LTD.), and 6.00 g of ion-exchanged water (component (E)) were uniformly emulsified and dispersed using a homo mixer and a disper to prepare an emulsion. To this emulsion, 37.90 g of ion-exchanged water was further added and uniformly dispersed using a homo mixer, and then an aqueous ammonia solution obtained by previously diluting 0.35 g of a 30% aqueous ammonia solution with 9.65 g of ion-exchanged water was added. After that, the liquid temperature was reduced to 15°C, polymerization was performed for 24 hours, and 0.39 g of acetic acid was added to neutralize to obtain an emulsion (II-7) containing organopolysiloxane (B-7) represented by the following average composition formula as the main component.

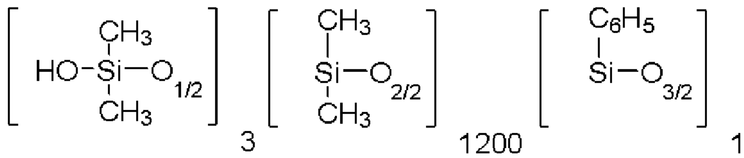

**(B-7)**

[Comparative Production Example B-8]

40.00 g of organopolysiloxane with both terminal silanol groups blocked, having a viscosity of 1,500 mPa·s at 25°C and being previously treated by heating and mixing under reduced pressure of 10 mmHg or less at 150°C to reduce low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.98 g of triethoxyphenylsilane, 1.28 g of an ethanol product (TOMAC: manufactured by Linyi Connect Chemical Technology Co., Ltd.) containing 95% active ingredient trioctylmethylammonium chloride (component (C)), 1.20 g of an ethanol product (LIPOQUAD 22-80: manufactured by LION SPECIALTY CHEMICALS CO., LTD.) containing 80% active ingredient behenyltrimethylammonium chloride (component (C)), 3.20 g of polyoxyethylene (10) tridecyl ether (component (C)) (Newcol 1310: manufactured by NIPPON NYUKAZAI CO., LTD.), and 6.00 g of ion-exchanged water (component (E)) were uniformly emulsified and dispersed using a homo mixer and a disper to prepare an emulsion. To this emulsion, 36.96 g of ion-exchanged water was further added and uniformly dispersed using a homo mixer, and then an aqueous ammonia solution obtained by previously diluting 0.35 g of a 30% aqueous ammonia solution with 9.65 g of ion-exchanged water was added. After that, the liquid temperature was reduced to 15°C, polymerization was performed for 24 hours, and 0.39 g of acetic acid was added to neutralize to obtain an emulsion (II-8) containing organopolysiloxane (B-8) represented by the following average composition formula as the main component.

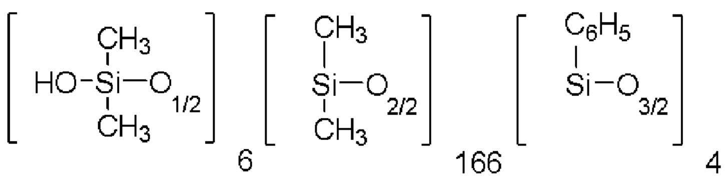

**(B-8)**

[Comparative Production Example B-9]

An emulsion (II-9) containing the above average composition formula (B-9) as the main component was obtained in the same manner as in Production Example B-1 except that the polymerization time in Production Example B-1 was changed to 20 minutes.

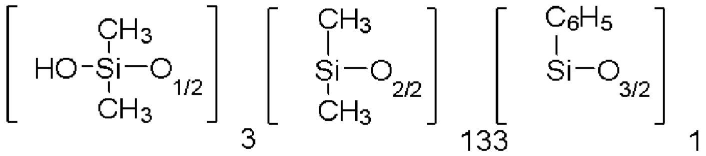

(B-9)

[Production Example B-10]

40.00 g of organopolysiloxane with both terminal silanol groups blocked, having a viscosity of 1,500 mPa·s at 25°C and being previously treated by heating and mixing under reduced pressure of 10 mmHg or less at 150°C to reduce low-molecular weight cyclic siloxanes of octamethylcyclotetrasiloxane (D4), decamethylcyclopentasiloxane (D5), and dodecamethylcyclohexasiloxane (D6) to less than 10 ppm each (detection limit), 0.53 g of triethoxyphenylsilane, 1.28 g of an ethanol product (TOMAC: manufactured by Linyi Connect Chemical Technology Co., Ltd.) containing 95% active ingredient trioctylmethylammonium chloride (component (C)), 1.20 g of an ethanol product (LIPOQUAD 22-80: manufactured by LION SPECIALTY CHEMICALS CO., LTD.) containing 80% active ingredient behenyltrimethylammonium chloride (component (C)), 3.20 g of polyoxyethylene (10) tridecyl ether (component (C)) (Newcol 1310: manufactured by NIPPON NYUKAZAI CO., LTD.), and 6.00 g of ion-exchanged water (component (E)) were uniformly emulsified and dispersed using a homo mixer and a disper to prepare an emulsion. To this emulsion, 37.40 g of ion-exchanged water was further added and uniformly dispersed using a homo mixer, and then an aqueous ammonia solution obtained by previously diluting 0.35 g of a 30% aqueous ammonia solution with 9.65 g of ion-exchanged water was added. After that, the liquid temperature was reduced to 15°C, polymerization was performed for 24 hours, and 0.39 g of acetic acid was added to neutralize to obtain an emulsion (II-10) containing organopolysiloxane (B-10) represented by the following average composition formula as the main component.

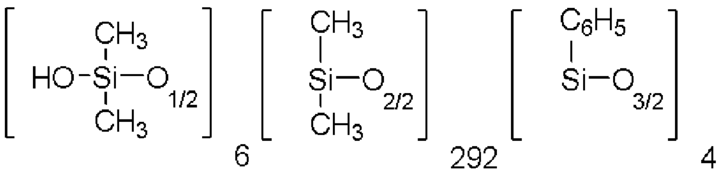

(B-10)

For the emulsions obtained in Production Examples B-1 to B-10 containing the component B as the main component, the organopolysiloxane viscosity and the contents of D4, D5, and D6 were measured by the following procedures.

(Organopolysiloxane viscosity)

30 g of the emulsion obtained in each Production Example was added to 200 g of isopropanol (IPA) with stirring to destroy the emulsion and extract organopolysiloxane. This organopolysiloxane was dried at 105°C for 3 hours, and then the viscosity was measured with a BH-type rotary viscometer at 25°C. This viscosity was measured as it was when the viscosity could be measured with the organopolysiloxane in a liquid form, and measured as 5% toluene solution viscosity when the viscosity was too high to be measured. The viscosity of all that could not be measured in the liquid form due to excessively high viscosity was 300,000 mPa·s or more.

[D4, D5, and D6 contents]

The contents of D4, D5, and D6 were measured as follows. To 10 mL of acetone, 0.1 g of the measurement sample was added, and the mixture was shaken for about 2 hours. After the low-molecular weight cyclic siloxanes were extracted into the acetone solution by shaking, and then the supernatant of the acetone solution was measured by gas chromatography (Agilent 7890B (manufactured by Agilent Technologies, Inc.)). The column of the gas chromatography used was DB-5MS (manufactured by Agilent Technologies, Inc.), the temperature in the column at the measurement was 300°C, and tetradecane was used as the internal standard material.

Emulsions (II-1) to (II-10) obtained in Production Examples B-1 to B-10 are described in Tables 2 and 3 below. Note that the contents (ppm) of D4, D5, and D6 in the table are the contents of D4, D5, and D6 (mass equivalent) based on 100 parts by mass of the component (B) .

[Table 2]

| | | Production Example B-1 | Production Example B-2 | Production Example B-3 | Production Example B-4 | Production Example B-5 | Production Example B-6 |
|---|---|---|---|---|---|---|---|
| Emulsion | | II-1 | II-2 | II-3 | II-4 | II-5 | II-6 |
| Component B | B-1 | 40.13 | | | | | |
| | B-2 | | 39.88 | | | | 39.92 |
| | B-3 | | | 40.23 | | | |
| | B-4 | | | | 40.05 | | |
| | B-5 | | | | | 39.88 | |
| | B-6 | | | | | | |
| | B-7 | | | | | | |
| | B-8 | | | | | | |
| | B-9 | | | | | | |
| | B-10 | | | | | | |
| Component C | Trioctylmethylammonium chloride | 1.22 | 1.22 | 1.22 | 1.22 | 1.22 | |
| | Behenyltrioctylammonium chloride | 0.96 | 0.96 | 0.96 | 0.96 | 0.96 | |
| | Newcol 1310 | 3.20 | 3.20 | 3.20 | 3.20 | 3.20 | |
| | Emalgen 109P | | | | | | 1.20 |
| | Sodium dodecylbenzenesulfonate | | | | | | 1.80 |
| Component E | Water | 53.53 | 53.74 | 53.43 | 53.61 | 53.78 | 55.78 |
| Organopolysiloxane viscosity of component B (mPa·s) | | Unmeasurable | 8.5 (5% toluene) | Unmeasurable | Unmeasurable | 5.0 (5% toluene) | 9.2 (5% toluene) |
| (g/h) of component B | | 133 | 500 | 100 | 133 | 900 | 500 |
| D4 content (ppm) | | 500 | 520 | 560 | 490 | 470 | 950 |
| D5 content (ppm) | | 230 | 240 | 300 | 220 | 250 | 870 |
| D6 content (ppm) | | 80 | 90 | 110 | 100 | 110 | 560 |

[Table 3]

| | | Production Example B-1-B | Production Example B-7 | Production Example B-8 | Production Example B-9 | Production Example B-10 |
|---|---|---|---|---|---|---|
| | Emulsion | II-1-B | II-7 | II-8 | II-9 | II-10 |
| Component B | B-1 | | | | | |
| | B-2 | | | | | |
| | B-3 | | | | | |
| | B-4 | | | | | |
| | B-5 | | | | | |
| | B-6 | 40.13 | | | | |
| | B-7 | | 39.87 | | | |
| | B-8 | | | 40.82 | | |
| | B-9 | | | | 40.13 | |
| | B-10 | | | | | 40.37 |
| Component C | Trioctylmethylammonium chloride | 1.22 | 1.22 | 1.22 | 1.22 | 1.22 |
| | Behenyltrioctylammonium chloride | 0.96 | 0.96 | 0.96 | 0.96 | 0.96 |
| | Newcol 1310 | 3.20 | 3.20 | 3.20 | 3.20 | 3.20 |
| | Emalgen 109P | | | | | |
| | Sodium dodecylbenzenesulfonate | | | | | |
| Component E | Water | 53.30 | 53.79 | 52.85 | 53.53 | 53.29 |
| Organopolysiloxane viscosity of component B (mPa·s) | | Unmeasurable | 4.6 (5% toluene) | Unmeasurable | 150,000 | Unmeasurable |
| (g/h) of component B | | 133 | 1200 | 40 | 133 | 73 |
| D4 content (ppm) | | 35,000 | 500 | 490 | 250 | 350 |
| D5 content (ppm) | | 22,000 | 390 | 250 | 120 | 180 |
| D6 content (ppm) | | 8,000 | 120 | 100 | 50 | 100 |

[Production Example D-1]

(D) Zinc formate in an amount of 10.00 parts by mass,

potassium acetate in an amount of 10.00 parts by mass, and

acetic acid in an amount of 0.50 parts by mass were mixed and dissolved in

(E) ion-exchanged water in an amount of 79.50 parts by mass to obtain an aqueous solution of a zinc compound (III-1).

[Production Example D-2]

(D) Zinc acetate in an amount of 24.00 parts by mass
was mixed and dissolved in
(E) ion-exchanged water in an amount of 76.00 parts by mass to obtain an aqueous solution of a zinc compound (III-2).

[Production Example D-3]

After 6.90 parts by mass of (D) zinc acetate was mixed and dissolved in 26.00 parts by mass of water using a homo mixer, 3.00 parts by mass of an ethanol product (LIPOQUAD 22-80: manufactured by LION SPECIALTY CHEMICALS CO., LTD.) containing 80% active ingredient behenyltrioctylammonium chloride (component (C)) was added and mixed.
In addition, a mixed solution of 4.10 parts by mass of potassium laurate dissolved in 30.00 parts by mass of hot water was added, and the mixture was mixed by a homo mixer to react some of zinc acetate with potassium laurate, thereby obtaining an emulsion containing zinc laurate and zinc acetate as the main components.
After that, 30.00 parts by mass of water was added, and the mixture was subjected to a high-pressure treatment under the condition of 30 MPa with a high-pressure homogenizer to obtain an emulsion composition (III-3) with zinc laurate and zinc acetate as main components.
The aqueous solution of the zinc compound or the emulsion containing the zinc compound obtained in Production Examples D-1 to D-3 (composition (III-1) to (III-3)) are described in Table 4 below.

[Table 4]

| | | Production Example D-1 | Production Example D-2 | Production Example D-3 |
|---|---|---|---|---|
| Composition | | III-1 | III-2 | III-3 |
| Component D | Zinc formate | 10 | | |
| | Zinc acetate | | 24 | 5.25 |
| | Zinc laurate | | | 5.36 |
| | Potassium acetate | 10 | | 1.66 |
| | Acetic acid | 0.5 | | |
| Component C | Behenyltrioctylammonium chloride | | | 2.37 |
| Component E | Water | 79.5 | 76 | 84.77 |
| | Ethanol | | | 0.59 |

(F) Polyfunctional isocyanate

Duranate WL72-100 (trade name): water-dispersed polyisocyanate, manufactured by Asahi Kasei Chemicals

Corporation.

[Examples 1 to 13 and Comparative Examples 1 to 5]

Each of the composition obtained in the above Production Examples was formulated in the amounts described in Tables 5 to 7 below to obtain the water repellent compositions of Examples 1 to 13 and Comparative Examples 1 to 5. The obtained water repellent compositions were subjected to the evaluation test shown below. The results are described in Tables 8 to 10 (in each formulation, the amount of each component shown was based on 100 parts by mass of the component (A)).

[Table 5]

| | Example 1 | Example 2 | Example 3 | Example 4 | Example 5 | Example 6 |
|---|---|---|---|---|---|---|
| I-1 | 37.50 | | | | 37.50 | 37.50 |
| I-2 | | 37.50 | | | | |
| I-3 | | | 37.50 | | | |
| I-4 | | | | 37.50 | | |
| II-1 | 25.00 | 25.00 | 25.00 | | 25.00 | 25.00 |
| II-2 | | | | | | |
| II-3 | | | | | | |
| II-4 | | | | | | |
| II-5 | | | | | | |
| II-6 | | | | | | |
| II-1-B | | | | | | |
| II-7 | | | | | | |
| II-8 | | | | | | |
| II-9 | | | | | | |
| II-10 | | | | 25.00 | | |
| III-1 | 37.50 | 37.50 | 37.50 | 37.50 | | |
| III-2 | | | | | 15.63 | |
| III-3 | | | | | | 37.50 |
| F | | | | | | |

[Table 6]

| | Example 7 | Example 8 | Example 9 | Example 10 | Example 11 | Example 12 | Example 13 |
|---|---|---|---|---|---|---|---|
| I-1 | 37.50 | 37.50 | 37.50 | 37.50 | 37.50 | 37.50 | 36.00 |
| I-2 | | | | | | | |
| I-3 | | | | | | | |
| I-4 | | | | | | | |
| II-1 | | | | | | | 24.00 |
| II-2 | 25.00 | | | | | | |
| II-3 | | 25.00 | | | | | |
| II-4 | | | 25.00 | | | | |
| II-5 | | | | 25.00 | | | |
| II-6 | | | | | 25.00 | | |

(continued)

| | Example 7 | Example 8 | Example 9 | Example 10 | Example 11 | Example 12 | Example 13 |
|---|---|---|---|---|---|---|---|
| II-1-B | | | | | | 25.00 | |
| II-7 | | | | | | | |
| II-8 | | | | | | | |
| II-9 | | | | | | | |
| II-10 | | | | | | | |
| III-1 | | | | | 37.50 | | |
| III-2 | | | | | | | |
| III-3 | 37.50 | 37.50 | 37.50 | 37.50 | | 37.50 | 36.00 |
| F | | | | | | | 4.00 |

[Table 7]

| | Comparative Example 1 | Comparative Example 2 | Comparative Example 3 | Comparative Example 4 | Comparative Example 5 |
|---|---|---|---|---|---|
| I-1 | 37.50 | 37.50 | 37.50 | | 37.50 |
| I-2 | | | | | |
| I-3 | | | | 37.50 | |
| I-4 | | | | | |
| II-1 | | | | | |
| II-2 | | | | | |
| II-3 | | | | | |
| II-4 | | | | | |
| II-5 | | | | 25.00 | |
| II-6 | | | | | |
| II-1-B | | | | | |
| II-7 | 25.00 | | | | |
| II-8 | | 25.00 | | | |
| II-9 | | | 25.00 | | |
| II-10 | | | | | 25.00 |
| III-1 | | | | | |
| III-2 | | | | | |
| III-3 | 37.50 | 37.50 | 37.50 | 37.50 | 37.50 |
| F | | | | | |

[Evaluation test]

1. Flexibility

To the water repellent composition described above, ion-exchanged water was added and stirred, and the mixture was diluted so that the component (A) was 3%, thereby preparing a test solution. Cotton broad cloth and polyester/cotton broad cloth (65%/35%) were immersed in this test solution for 10 seconds, then squeezed with a roll under the condition of 100% squeeze ratio and dried at 150°C for 2 minutes to prepare a treated cloth for flexibility evaluation. The treated cloth was washed 10 times with a washing machine by the method according to JIS L0217 103. Three panelists

touched the treated cloth before and after washing 10 times, and compared with the untreated cloth, and the flexibility and texture were evaluated by the following scores. The results are shown by the following evaluation criteria based on the sum of the scores of the three panelists.

<Scores>

3 points: The treated cloth is much more comfortable to the touch compared to the untreated cloth.
2 points: The treated cloth is more comfortable to the touch compared to the untreated cloth.
1 point: The treated cloth is as comfortable to the touch as the untreated cloth.
0 points: The treated cloth is uncomfortable to the touch compared to the untreated cloth.

<Evaluation criteria>

Excellent: 9 points in total
Good: 7-8 points in total
Fair: 5-6 points in total
Slightly poor: 3-4 points in total
Poor: 2 points or less in total

2. Water repellency

To the water repellent composition described above, ion-exchanged water was added and stirred, and the mixture was diluted so that the component (A) was 3%, thereby preparing a test solution. Cotton broad cloth, polyester/cotton broad cloth (65%/35%) and polyester taffeta cloth were immersed in this test solution for 10 seconds, then squeezed with a roll under the condition of 100% squeeze ratio and dried at 150°C for 3 minutes to prepare a treated cloth for flexibility evaluation. The treated cloth was then washed 20 times with a washing machine by the method according to JIS L0217 103. Each of the unwashed cloth, the cloth after washing 5 times, the cloth after washing 10 times, and the cloth after washing 20 times was tested by the spray method according to JIS-L 1092. The results were visually observed and evaluated according to the following grades.

Water repellency: Status

5: No wet adhesion on the surface
4: Slight wet adhesion on the surface
3: Partial wetness on the surface
2: Wetness on the surface
1: Wetness on the entire surface
0: Complete wetness on the front and back sides of the surface

[Table 8]

| | | Example 1 | Example 2 | Example 3 | Example 4 | Example 5 | Example 6 | Example 7 |
|---|---|---|---|---|---|---|---|---|
| A | A-1 | 100.00 | | | | 100.00 | 100.00 | 100.00 |
| | A-2 | | 100.00 | | | | | |
| | A-3 | | | 100.00 | | | | |
| | A-4 | | | | 100.00 | | | |
| B | B-1 | 44.59 | 44.31 | 44.35 | | 44.59 | 44.59 | |
| | B-2 | | | | | | | 44.31 |
| | B-10 | | | | 44.86 | | | |
| C | Nonion K-204 | 2.00 | 2.00 | 2.00 | 2.00 | 2.00 | 2.00 | 2.00 |
| | Nonion K-230 | 0.50 | 0.50 | 0.50 | 0.50 | 0.50 | 0.50 | 0.50 |
| | Newcol 1310 | 3.56 | 3.56 | 3.56 | 3.56 | 3.56 | 3.56 | 3.56 |
| | Emalqen 109P | | | | | | | |
| | Trioctylmethylammon ium chloride | 1.36 | 1.36 | 1.36 | 1.36 | 1.36 | 1.36 | 1.36 |
| | Behenyltrimethylamm onium chloride | 1.07 | 1.07 | 1.07 | 1.07 | 1.07 | 5.02 | 5.02 |
| | Sodium dodecylbenzenesulfo nate | | | | | | | |
| D | Zinc formate | 16.67 | 16.67 | 16.67 | 16.67 | | | |
| | Zinc acetate | | | | | 16.67 | 8.75 | 8.75 |
| | Zinc laurate | | | | | | 8.93 | 8.93 |
| E | Water | 256.14 | 256.14 | 256.14 | 255.88 | 176.53 | 264.67 | 265.16 |
| F | Polyfunctional isocyanate | | | | | | | |
| Hydrogen gas generation amount of component A | | 340 | 270 | 240 | 300 | 340 | 340 | 340 |
| Organopolysiloxane viscosity of component B (mPa.s) | | Unmeasura ble | Unmeasura ble | Unmeasura ble | Unmeasura ble | Unmeasura ble | Unmeasura ble | 8.5 (5% toluene) |
| (g/h) of component B | | 133 | 133 | 133 | 73 | 133 | 133 | 500 |
| X/Y | | 2.56 | 2.03 | 1.80 | 4.11 | 2.56 | 2.56 | 0.68 |

(continued)

| | | Example 1 | Example 2 | Example 3 | Example 4 | Example 5 | Example 6 | Example 7 |
|---|---|---|---|---|---|---|---|---|
| Flexibility | | | | | | | | |
| Cotton cloth | Before washing | Excellent | Excellent | Excellent | Excellent | Excellent | Excellent | Excellent |
| | After washing 10 times | Excellent | Excellent | Excellent | Good | Excellent | Excellent | Excellent |
| Polyester/ cotton cloth | Before washing | Excellent | Excellent | Excellent | Good | Excellent | Excellent | Excellent |
| | After washing 10 times | Good | Good | Excellent | Good | Good | Good | Excellent |
| Water repellency | | | | | | | | |
| Cotton cloth | Before washing | 5 | 5 | 5 | 5 | 5 | 5 | 5 |
| | After washing 5 times | 5 | 4 | 4 | 5 | 5 | 5 | 5 |
| | After washing 10 times | 4 | 4 | 4 | 4 | 4 | 4 | 4 |
| | After washing 20 times | 4 | 4 | 4 | 4 | 4 | 4 | 4 |
| Polyester/ cotton cloth | Before washing | 5 | 5 | 5 | 5 | 5 | 5 | 5 |
| | After washing 5 times | 5 | 5 | 4 | 5 | 5 | 5 | 5 |
| | After washing 10 times | 4 | 4 | 4 | 4 | 4 | 5 | 4 |
| | After washing 20 times | 4 | 4 | 4 | 4 | 4 | 5 | 4 |
| Polyester cloth | Before washing | 5 | 5 | 5 | 5 | 5 | 5 | 5 |
| | After washing 5 times | 5 | 5 | 5 | 5 | 5 | 5 | 5 |
| | After washing 10 times | 4 | 4 | 4 | 4 | 5 | 5 | 5 |
| | After washing 20 times | 4 | 4 | 4 | 4 | 4 | 5 | 5 |

In the evaluation columns (flexibility, water repellency) in the table, "cotton cloth" refers to cotton broad cloth, "polyester/cotton cloth" refers to polyester/cotton broad cloth (65%/35%), and "polyester cloth" refers to polyester taffeta cloth. The same applies below.

[Table 9]

| | | Example 8 | Example 9 | Example 10 | Example 11 | Example 12 | Example 13 |
|---|---|---|---|---|---|---|---|
| A | A-1 | 100.00 | 100.00 | 100.00 | 100.00 | 100.00 | 100.00 |
| | A-2 | | | | | | |
| | A-3 | | | | | | |
| | A-4 | | | | | | |
| B | B-1 | | | | | | 44.59 |
| | B-2 | | | | 44.35 | | |
| | B-3 | 44.70 | | | | | |
| | B-4 | | 44.50 | | | | |
| | B-5 | | | 44.31 | | | |
| | B-6 | | | | | 44.59 | |
| C | Nonion K-204 | 2.00 | 2.00 | 2.00 | 2.00 | 2.00 | 2.00 |
| | Nonion K-230 | 0.50 | 0.50 | 0.50 | 0.50 | 0.50 | 0.50 |
| | Newcol 1310 | 3.56 | 3.56 | 3.56 | 3.56 | 3.56 | 3.56 |
| | Emalgen 109P | | | | 1.33 | | |
| | Trioctylmethylammonium chloride | 1.36 | 1.36 | 1.36 | | 1.36 | 1.36 |
| | Behenyltrimethylammoniu m chloride | 5.02 | 5.02 | 5.02 | | 5.02 | 5.02 |
| | Sodium dodecylbenzenesulfonate | | | | 2.00 | | |
| D | Zinc formate | | | | 16.67 | | |
| | Zinc acetate | 8.75 | 8.75 | 8.75 | | 8.75 | 8.75 |
| | Zinc laurate | 8.93 | 8.93 | 8.93 | | 8.93 | 8.58 |
| E | Water | 264.82 | 265.02 | 265.21 | 258.31 | 264.67 | 264.93 |
| F | Polyfunctional isocyanate | | | | | | 18.52 |
| Hydrogen gas generation amount of component A | | 340 | 340 | 340 | 340 | 340 | 340 |

(continued)

| | | Example 8 | Example 9 | Example 10 | Example 11 | Example 12 | Example 13 |
|---|---|---|---|---|---|---|---|
| Organopolysiloxane viscosity of component B (mPa·s) | | Unmeasurabl e | Unmeasurabl e | 5.0 (5% to-luene) | 9.2 (5% to-luene) | Unmeasurabl e | Unmeasurabl e |
| (g/h) of component B | | 100 | 133 | 900 | 500 | 133 | 133 |
| X/Y | | 3.40 | 2.56 | 0.38 | 0.68 | 2.56 | 2.56 |
| Flexibility | | | | | | | |
| Cotton cloth | Before washing | Good | Excellent | Excellen t | Excellen t | Good | Excellent |
| | After washing 10 times | Good | Good | Excellen t | Excellen t | Good | Good |
| Polyester/cotto n cloth | Before washing | Good | Good | Excellen t | Excellen t | Good | Good |
| | After washing 10 times | Good | Good | Excellen t | Excellen t | Good | Good |
| Water repellency | | | | | | | |
| Cotton cloth | Before washing | 5 | 5 | 5 | 5 | 5 | 5 |
| | After washing 5 times | 5 | 5 | 5 | 4 | 5 | 5 |
| | After washing 10 times | 5 | 4 | 4 | 4 | 4 | 5 |
| | After washing 20 times | 5 | 4 | 4 | 4 | 4 | 5 |
| Polyester/cotto n cloth | Before washing | 5 | 5 | 5 | 5 | 5 | 5 |
| | After washing 5 times | 5 | 5 | 5 | 5 | 5 | 5 |
| | After washing 10 times | 5 | 5 | 4 | 4 | 4 | 5 |
| | After washing 20 times | 5 | 5 | 4 | 4 | 4 | 5 |
| Polyester cloth | Before washing | 5 | 5 | 5 | 5 | 5 | 5 |
| | After washing 5 times | 5 | 5 | 5 | 5 | 5 | 5 |
| | After washing 10 times | 5 | 5 | 4 | 4 | 5 | 5 |
| | After washing 20 times | 5 | 5 | 4 | 4 | 4 | 5 |

[Table 10]

| | | Comparative Example 1 | Comparative Example 2 | Comparative Example 3 | Comparative Example 4 | Comparative Example 5 |
|---|---|---|---|---|---|---|
| A | A-1 | 100.00 | 100.00 | 100.00 | | 100.00 |
| | A-2 | | | | | |
| | A-3 | | | | 100.00 | |
| | A-4 | | | | | |
| B | B-5 | | | | 44.31 | |
| | B-7 | 44.30 | | | | |
| | B-8 | | 45.35 | | | |
| | B-9 | | | 40.13 | | |
| | B-10 | | | | | 44.56 |
| C | Nonion K-204 | 2.00 | 2.00 | 2.00 | 2.00 | 2.00 |
| | Nonion K-230 | 0.50 | 0.50 | 0.50 | 0.50 | 0.50 |
| | Newcol 1310 | 3.56 | 3.56 | 3.56 | 3.56 | 3.56 |
| | Emalgen 109P | | | | | |
| | Trioctylmethylammonium chloride | 1.36 | 1.36 | 1.36 | 1.36 | 1.36 |
| | Behenyltrimethylammonium chloride | 5.02 | 5.02 | 5.02 | 5.02 | 5.02 |
| | Sodium dodecylbenzenesulfonate | | | | | |
| D | Zinc formate | | | | | |
| | Zinc acetate | 8.75 | 8.75 | 8.75 | 8.75 | 8.75 |
| | Zinc laurate | 8.93 | 8.93 | 8.93 | 8.93 | 8.93 |
| E | Water | 265.22 | 264.17 | 264.93 | 265.21 | **264.66** |
| F | Polyfunctional isocyanate | | | | | |
| Hydrogen gas generation amount of component A | | 340 | 340 | 340 | 240 | 340 |
| Organopolysiloxane viscosity of component B (mPa·s) | | 4.6 (5% toluene) | Unmeasurable | 150000 | 5.0 (5% toluene) | Unmeasurable |
| (g/h) of component B | | 1200 | 40 | 133 | 900 | 73 |
| X/Y | | 0.28 | 8.50 | 2.56 | 0.27 | 4.66 |

(continued)

| | | Comparative Example 1 | Comparative Example 2 | Comparative Example 3 | Comparative Example 4 | Comparative Example 5 |
|---|---|---|---|---|---|---|
| Flexibility | | | | | | |
| Cotton cloth | Before washing | Excellent | Good | Excellent | Excellent | Excellent |
| | After washing 10 times | Excellent | Fair | Excellent | Excellent | Fair |
| Polyester/cotton cloth | Before washing | Excellent | Fair | Excellent | Excellent | Fair |
| | After washing 10 times | Excellent | Slightly poor | Good | Excellent | Slightly poor |
| Water repellency | | | | | | |
| Cotton cloth | Before washing | 5 | 5 | 5 | 5 | 5 |
| | After washing 5 times | 4 | 5 | 3 | 3 | 5 |
| | After washing 10 times | 4 | 4 | 2 | 3 | 4 |
| | After washing 20 times | 3 | 4 | 2 | 3 | 4 |
| Polyester/cotton cloth | Before washing | 5 | 5 | 5 | 5 | 5 |
| | After washing 5 times | 5 | 5 | 4 | 4 | 5 |
| | After washing 10 times | 4 | 4 | 3 | 3 | 4 |
| | After washing 20 times | 3 | 4 | 3 | 3 | 4 |
| Polyester cloth | Before washing | 5 | 5 | 5 | 5 | 5 |
| | After washing 5 times | 5 | 5 | 4 | 4 | 5 |
| | After washing 10 times | 4 | 4 | 4 | 4 | 4 |
| | After washing 20 times | 4 | 4 | 3 | 4 | 4 |

As shown in the table above, the water repellent composition of the present invention (Examples 1 to 13) has an excellent effect of imparting water repellency, and the flexibility and texture of the treated cloth are good. Furthermore, the water repellent composition of the present invention maintains high water repellency, flexibility and texture even after washing.

In addition, Example 13 containing the component (F) can maintain excellent water repellency for longer while maintaining the flexibility and texture even after repeated washing compared to Example 5 without the component (F). This is believed to be due to the effect of the component (F). In other words, by containing the component (F) having the isocyanate group, it is possible that the reactive groups contained in the component (A) and the component (B) chemically react and crosslink with the isocyanate group of the component (F), and since the isocyanate group can also react with the reactive group contained in the substrate to be treated, it is believed that it is possible to form a stronger film and improve water repellency after repeated washing.

On the other hand, in Comparative Example 1 where the ratio (g/h) of the component (B) exceeded the upper limit value and the ratio (X/Y) was less than the lower limit value, the water repellency was unable to be maintained when washing was repeated, and in Comparative Example 2 where the ratio (g/h) was less than the lower limit value and the ratio (X/Y) exceeded the upper limit value, the flexibility and texture of the treated cloth was unable to be maintained when washing was repeated. Even when the ratio (g/h) was within the scope of the present invention, the water repellency was unable to be maintained when washing was repeated in Comparative Example 4 because the ratio (X/Y) was less than the lower limit value, and the flexibility and texture was unable to be maintained when washing was repeated in Comparative Example 5 because the ratio (X/Y) exceeded the upper limit value. Furthermore, even when both the ratio (g/h) and the ratio (X/Y) were within the scope of the present invention, water repellency was greatly reduced when washing was repeated in Comparative Example 3 where the viscosity (25°C) of the component (B) organopolysiloxane was less than 300,000 mPa.

Thus, by having all the essential requirements of the present invention, the water repellent composition has an excellent effect of imparting water repellency, can impart good flexibility and texture to fibers after treatment, and can maintain good water repellency and flexibility even after washing.

[Industrial Applicability]

The water repellent composition of the present invention has an excellent effect of imparting water repellency, also has good flexibility and texture to treated cloths and can maintain high water repellency even after washing. In addition, due to the low content of fluorine compounds, the impact on the environment is low.

The present description includes the following inventions.

[1] A water repellent composition comprising:

(A) an organohydrogen polysiloxane being represented by the following average composition formula (1):

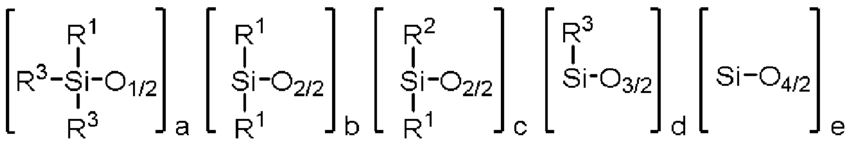

(1)

wherein, $R^1$ is each independently an unsubstituted monovalent hydrocarbon group having 1 to 20 carbon atoms, $R^2$ is a hydrogen atom, $R^3$ is each independently a group selected from $R^1$, $R^2$, -OH, $-OCH_3$, and $-OC_2H_5$, and a, b, c, d and e are numbers satisfying ranges of $0 \leq a \leq 10$, $0 \leq b \leq 100$, $0 \leq c \leq 500$, $0 \leq d \leq 5$, and $0 \leq e \leq 5$, provided that, when c = 0, one or more of $R^3$ is $R^2$, and having a viscosity of 5 to 1,000 mPa·s at 25°C, in an amount of 100 parts by mass;

(B) an organopolysiloxane having a viscosity of 300,000 mPa·s or more at 25°C and being represented by the following average composition formula (2), in an amount of 10 to 100 parts by mass,

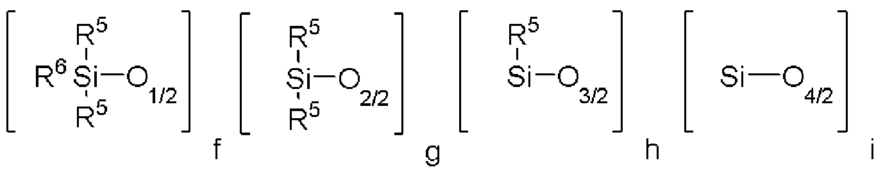

(2)

wherein, $R^5$ is each independently a hydrogen atom or a substituted or unsubstituted monovalent organic group

having 1 to 20 carbon atoms, $R^6$ is each independently a group selected from the options of $R^5$, a hydroxy group, or an alkoxy group having 1 to 20 carbon atoms, and f, g, h, and i are values satisfying a viscosity of the organopolysiloxane of 300,000 mPa·s or more at 25°C and satisfy $f \geq 2$, $h \geq 1$, $i \geq 0$, and a ratio (g/h) of g to h of $50 \leq (g/h) \leq 1{,}000$;

(C) a surfactant in an amount of 0.5 to 50 parts by mass;
(D) a condensation reaction catalyst in an amount of 5 to 100 parts by mass; and
(E) water in an amount of 50 to 3,000 parts by mass,

wherein, when a hydrogen gas generation amount of the component (A) in terms of 0°C and 101.325 kPa is defined as X (mL/g) and the ratio (g/h) of g to h of the component (B) is defined as Y, a ratio (X/Y) of X to Y is in a range of $0.30 \leq (X/Y) \leq 4.50$.

[2] The water repellent composition according to [1], wherein 10% or more of total substituents represented by $R^1$, $R^2$ and $R^3$ in the component (A) is $R^2$.

[3] The water repellent composition according to [1] or [2], wherein the ratio (g/h) of g to h of the component (B) is $70 \leq (g/h) \leq 950$.

[4] The water repellent composition according to any one of [1] to [3], wherein the component (D) is a compound of one or more metals selected from tin, zinc, bismuth, titanium, iron, zirconium, and aluminum.

[5] The water repellent composition according to any one of [1] to [4], wherein each content of octamethylcyclotetrasiloxane (D4), decamethylcyclopentasiloxane (D5), and dodecamethylcyclohexasiloxane (D6) in the water repellent composition is less than 3,000 ppm based on 100 parts by mass of the component (B).

[6] The water repellent composition according to any one of [1] to [5], wherein the (C) surfactant comprises a cationic surfactant.

[7] The water repellent composition according to [6], wherein the cationic surfactant is cationic surfactants represented by the following formulae (C-1) and (C-2):

(C-1) a cationic surfactant represented by $Q^1{}_3(CH_3)N^+ \cdot X^-$
(C-2) a cationic surfactant represented by $Q^2(CH_3)_3N^+ \cdot X^-$

wherein, $Q^1$ is the same or different and is a monovalent organic group having 6 to 30 carbon atoms, $Q^2$ is a monovalent organic group having 17 to 30 carbon atoms, and X is each independently a halogen atom or a monovalent carboxyl group having 1 to 6 carbon atoms.

[8] The water repellent composition according to any one of [1] to [7], further comprising (F) a polyfunctional isocyanate compound in an amount of 1 to 50 parts by mass based on 100 parts by mass of the component (A).

[9] The water repellent composition according to any one of [1] to [8], wherein a content of a fluorine compound is less than 1 part by mass based on 100 parts by mass of the component (A).

[10] A fiber treatment agent comprising the water repellent composition according to any one of [1] to [9].

The present invention is not limited to the above embodiments. The above embodiments are to show examples, and anything having substantially the same configuration as the technical ideas described in the claims of the present invention and having a similar effect is encompassed within the technical scope of the present invention.

## Claims

**1.** A water repellent composition comprising:

(A) an organohydrogen polysiloxane being represented by the following average composition formula (1):

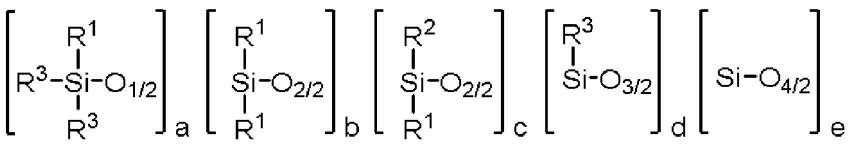

(1)

wherein, $R^1$ is each independently an unsubstituted monovalent hydrocarbon group having 1 to 20 carbon atoms, $R^2$ is a hydrogen atom, $R^3$ is each independently a group selected from $R^1$, $R^2$, -OH, $-OCH_3$, and $-OC_2H_5$, and a, b, c, d and e are numbers satisfying ranges of $0 \leq a \leq 10$, $0 \leq b \leq 100$, $0 \leq c \leq 500$, $0 \leq d \leq 5$, and $0 \leq e \leq 5$, provided that, when c = 0, one or more of $R^3$ is $R^2$, and having a viscosity of 5 to 1,000 mPa·s at 25°C, in an amount of 100 parts by

mass;

(B) an organopolysiloxane having a viscosity of 300,000 mPa·s or more at 25°C and being represented by the following average composition formula (2), in an amount of 10 to 100 parts by mass,

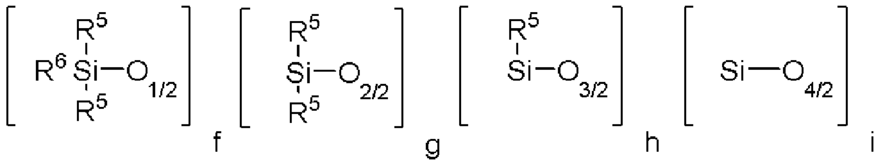

(2)

wherein, $R^5$ is each independently a hydrogen atom or a substituted or unsubstituted monovalent organic group having 1 to 20 carbon atoms, $R^6$ is each independently a group selected from the options of $R^5$, a hydroxy group, or an alkoxy group having 1 to 20 carbon atoms, and f, g, h, and i are values satisfying a viscosity of the organopolysiloxane of 300,000 mPa·s or more at 25°C and satisfy $f \geq 2$, $h \geq 1$, $i \geq 0$, and a ratio (g/h) of g to h of $50 \leq (g/h) \leq 1{,}000$;

(C) a surfactant in an amount of 0.5 to 50 parts by mass;

(D) a condensation reaction catalyst in an amount of 5 to 100 parts by mass; and

(E) water in an amount of 50 to 3,000 parts by mass,

wherein, when a hydrogen gas generation amount of the component (A) in terms of 0°C and 101.325 kPa is defined as X (mL/g) and the ratio (g/h) of g to h of the component (B) is defined as Y, a ratio (X/Y) of X to Y is in a range of $0.30 \leq (X/Y) \leq 4.50$.

**2.** The water repellent composition according to claim 1, wherein 10% or more of total substituents represented by $R^1$, $R^2$ and $R^3$ in the component (A) is $R^2$.

**3.** The water repellent composition according to claim 1, wherein the ratio (g/h) of g to h of the component (B) is $70 \leq (g/h) \leq 950$.

**4.** The water repellent composition according to claim 1, wherein the component (D) is a compound of one or more metals selected from tin, zinc, bismuth, titanium, iron, zirconium, and aluminum.

**5.** The water repellent composition according to claim 1, wherein each content of octamethylcyclotetrasiloxane (D4), decamethylcyclopentasiloxane (D5), and dodecamethylcyclohexasiloxane (D6) in the water repellent composition is less than 3,000 ppm based on 100 parts by mass of the component (B).

**6.** The water repellent composition according to claim 1, wherein the (C) surfactant comprises a cationic surfactant.

**7.** The water repellent composition according to claim 6, wherein the cationic surfactant is cationic surfactants represented by the following formulae (C-1) and (C-2):

(C-1) a cationic surfactant represented by $Q^1{}_3(CH_3)N^+ \cdot X^-$

(C-2) a cationic surfactant represented by $Q^2(CH_3)_3N^+ \cdot X^-$

wherein, $Q^1$ is the same or different and is a monovalent organic group having 6 to 30 carbon atoms, $Q^2$ is a monovalent organic group having 17 to 30 carbon atoms, and X is each independently a halogen atom or a monovalent carboxyl group having 1 to 6 carbon atoms.

**8.** The water repellent composition according to claim 1, further comprising (F) a polyfunctional isocyanate compound in an amount of 1 to 50 parts by mass based on 100 parts by mass of the component (A).

**9.** The water repellent composition according to claim 1, wherein a content of a fluorine compound is less than 1 part by mass based on 100 parts by mass of the component (A).

**10.** A fiber treatment agent comprising the water repellent composition according to any one of claims 1 to 9.

## INTERNATIONAL SEARCH REPORT

International application No.
**PCT/JP2023/042601**

### A. CLASSIFICATION OF SUBJECT MATTER

***C09K 3/18***(2006.01)i; ***D06M 13/395***(2006.01)i; ***D06M 13/463***(2006.01)i; ***D06M 15/643***(2006.01)i
FI: C09K3/18 104; D06M15/643; D06M13/463; D06M13/395

According to International Patent Classification (IPC) or to both national classification and IPC

### B. FIELDS SEARCHED

Minimum documentation searched (classification system followed by classification symbols)

C09K3/18; D06M13/395; D06M13/463; D06M15/643

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2014/185158 A1 (SHIN-ETSU CHEMICAL CO., LTD.) 20 November 2014 (2014-11-20)<br>claims, examples, etc. | 1-10 |
| A | JP 2022-103613 A (SHIN-ETSU CHEMICAL CO., LTD.) 08 July 2022 (2022-07-08)<br>claims, examples, etc. | 1-10 |
| A | JP 2011-219630 A (SHIN-ETSU CHEMICAL CO., LTD.) 04 November 2011 (2011-11-04)<br>claims, examples, etc. | 1-10 |
| A | JP 10-140480 A (TOSHIBA SILICONE CO., LTD.) 26 May 1998 (1998-05-26)<br>claims, examples, etc. | 1-10 |
| A | JP 2016-166324 A (SHIN-ETSU CHEMICAL CO., LTD.) 15 September 2016 (2016-09-15)<br>claims, examples, etc. | 1-10 |
| A | WO 2021/132073 A1 (SHIN-ETSU CHEMICAL CO., LTD.) 01 July 2021 (2021-07-01)<br>claims, examples, etc. | 1-10 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/042601**

| Patent document cited in search report | Publication date (day/month/year) | Patent family member(s) | Publication date (day/month/year) |
|---|---|---|---|
| WO 2014/185158 A1 | 20 November 2014 | US 2016/0096959 A1<br>claims, examples, etc.<br>EP 2998360 A1<br>CN 105209550 A | |
| JP 2022-103613 A | 08 July 2022 | (Family: none) | |
| JP 2011-219630 A | 04 November 2011 | US 2011/0251339 A1<br>claims, examples, etc.<br>EP 2395062 A2<br>CN 102344748 A | |
| JP 10-140480 A | 26 May 1998 | (Family: none) | |
| JP 2016-166324 A | 15 September 2016 | US 2016/0257787 A1<br>claims, examples, etc.<br>EP 3064531 A1 | |
| WO 2021/132073 A1 | 01 July 2021 | US 2023/0048808 A1<br>claims, examples, etc.<br>EP 4083138 A1<br>CN 114846200 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2960304 B
- JP 2018104866 A
- JP 6573548 B
- JP 2016204565 A
- WO 2019131456 A
- JP 2016166324 A